(19) Europäisches Patentamt European Patent Office Office européen des brevets

(11) **EP 2 213 395 B1**

(12) **FASCICULE DE BREVET EUROPEEN**

(45) Date de publication et mention
de la délivrance du brevet:
**11.07.2012 Bulletin 2012/28**

(51) Int Cl.:
***B23B 1/00*** *(2006.01)* ***G05B 19/4093*** *(2006.01)*

(21) Numéro de dépôt: **10152032.8**

(22) Date de dépôt: **28.01.2010**

(54) **Procédé de préparation de réglages d'outils, dispositif de préparation de réglages d'outils, et procédé de réglages d'outils**

Verfahren zur Vorbereitung der Einstellung von Werkzeugen, Vorrichtung zur Vorbereitung der Einstellen von Werkzeugen und Einstellungsverfahren von Werkzeugen

Method for preparing adjustments of tools, device for preparing adjustments of tools, and method for adjusting tools

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.01.2009 EP 09151563**

(43) Date de publication de la demande:
**04.08.2010 Bulletin 2010/31**

(73) Titulaires:
• **Centre Technique de l'Industrie du Décolletage**
**74300 Cluses (FR)**
• **Université de Savoie**
**73000 Chambery (FR)**

(72) Inventeurs:
• **Pairel, Eric**
**73000 Chambéry (FR)**
• **Goldschmidt, Ephraïm James Martin**
**74300 Cluses (FR)**

(74) Mandataire: **Croonenbroek, Thomas Jakob**
**Cabinet Innovincia**
**11, Avenue des Tilleuls**
**74200 Thonon-les-Bains (FR)**

(56) Documents cités:
• **LEHTIHET E A ET AL: "Comparative evaluation of tolerance control chart model" INTERNATIONAL JOURNAL OF PRODUCTION RESEARCH, TAYLOR AND FRANCIS, GB LNKD-DOI:10.1080/002075400188717, vol. 38, no. 7, 10 mai 2000 (2000-05-10), pages 1539-1556, XP008120307 ISSN: 0020-7543**
• **HUANG S H ET AL: "Tolerance Analysis in Setup Planning for Rotational Parts" JOURNAL OF MANUFACTURING SYSTEMS, SOCIETY OF MANUFACTURING ENGINEERS, DEARBORN, MI, US, vol. 15, no. 5, 1 janvier 1996 (1996-01-01), pages 340-350, XP004013916 ISSN: 0278-6125**

**Description**

La présente invention se situe dans le domaine du décolletage et plus particulièrement dans le domaine de réglage d'une part des positions des outils par rapport à leurs trajectoires et d'autre part des géométries de leurs arrêtes de coupe.

Plus spécifiquement, l'invention s'applique de façon générale à toute sorte de machine - outil pour l'usinage de tout matériau par enlèvement de matière : le tournage, le perçage, le fraisage, le décolletage, le fonçage, le chariotage. Elle peut s'appliquer à tout matériau comme du métal, par exemple des aciers ou des alliages, ou bien aussi aux matériaux plastiques et matériaux composites.

Elle s'applique aussi bien aux machines-outils numériques que manuelles.

Dans l'objectif de réduire les coûts de fabrication, il est nécessaire d'assister le réglage des machines-outils, pour diminuer d'une part, les pertes de temps de production (gain de productivité) et d'autre part les rebuts (gain en coût de non-qualité).

Le réglage d'un outil consiste à régler d'une part la position de l'outil par rapport à sa trajectoire et d'autre part à régler la géométrie de l'outil si c'est un outil de forme ou la géométrie de sa trajectoire si c'est un outil de contournage.

Actuellement, on constate en industrie que le réglage des machines est entièrement laissé à l'initiative du régleur qui définit sa propre stratégie de réglage au pied des machines. Vu la complexité des machines-outils, il arrive fréquemment que le régleur monte et effectue le réglage d'un outil après l'autre de façon séquentielle en choisissant l'ordre lui-même. Selon la machine-outil utilisée, chaque outil est contrôlé et réglé une ou plusieurs fois, avant d'occuper sa position finale. Les temps de réglage sont donc souvent longs et variables entre régleurs. Ces aléas affectent la productivité des machines -outils.

Les ateliers de production manufacturière, notamment ceux qui font de l'usinage / le décolletage, ont deux missions essentielles :

- Garantir la conformité des pièces produites vis-à-vis des spécifications géométriques indiquées sur le dessin de définition de la pièce.
- Piloter, en réglant périodiquement, les machines-outils pour concourir à l'obtention de la conformité.

Même en restreignant les spécifications géométriques au cas des cotes unidirectionnelles, ces deux missions sont difficiles à concilier aujourd'hui dans les ateliers.

En effet, pour produire une pièce, le préparateur méthode définit la succession d'opérations de fabrication qui lui semble la plus appropriée compte tenu des moyens de production dont il dispose et de son savoir faire. On appelle dorénavant cette succession d'opérations de fabrication le processus de fabrication.

Le préparateur méthodes va ensuite effectuer un séquençage de ces opérations en étapes de fabrication. On appelle étapes de fabrication, la succession d'opérations de fabrication, contrôlées à la fin par une opération de contrôle.

Chaque étape de fabrication donne lieu à un dessin de fabrication qui sera transmis au régleur machine.

Comme tout dessin technique, des cotes sont à indiquer sur les différents dessins de fabrication. Nous les appellerons les cotes de fabrication car elles définissent la géométrie de la pièce à l'issue de l'étape de fabrication et ce sont elles qui seront mesurées à l'issue de chaque étape.

Or, on note que le jeu de cotes de fabrication n'est pas le même que le jeu de cotes-études, car certaines cotes-études ne peuvent pas être mesurées directement en fabrication.

Le choix du jeu de cotes de fabrication à un fort impacte sur les tolérances de ces cotes.

Deux outils pour assister des régleurs dans leur tache valent la peine d'être cités. La première est basée sur la méthode française de détermination des cotes de fabrication de Pierre Bourdet appelé la « méthode des Δl ». La deuxième est basée sur la méthode anglo-saxonne proposée par Olivier R. Wade (« Method of traces »).

CAPPI Z V5 (2007), basé sur la méthode des Δl et développé par Daniel Duret de l'Université de Savoie (France), est un logiciel de modélisation de la production qui a pour objectif de simuler les capabilités des moyens de production. A partir de la définition du produit fourni par le client ainsi que du processus de fabrication choisi par le préparateur méthodes, CAPPI Z permet de déterminer en automatique le jeu de cotes de fabrication (unique) ainsi que les limites d'acceptation du produit (tolérances sur les cotes de fabrication).

CAATC (Computer-Aided Angular Tolerance Charting, 2006), basé sur la « méthode des traces » est un logiciel développé par Ping Ji et Jianbin Xue (People's Republic of China). Il permet de générer de façon automatique les tolérances des cotes de fabrication choisies par le préparateur méthodes à partir du processus de fabrication, lui aussi choisi par le préparateur méthodes. L'approche proposée permet de traiter des cas 2D.

Ces méthodes et logiciels actuels sont basés sur un séquençage des opérations de fabrication, systématiquement regroupées par prises de pièces. Pour contrôler les cotes de fabrication, une opération de contrôle est réalisée après chaque prise de pièce.

Hors, en décolletage, il n'est pas envisageable d'interrompre la production pour mesurer la pièce suite aux opérations réalisées sur la broche principale, avant qu'elle ne transite en automatique sur la broche de reprise, où sont effectuées d'autres opérations de fabrication. Le modèle de séquençage des opérations par prise de pièce proposé à la fois par les méthodes de Pierre Bourdet et d'Olivier Wade et les logiciels précités ne sont donc pas applicable en décolletage.

De plus, ces méthodes et ces logiciels ne font pas la distinction entre le réglage initial ou régulier des outils et leur re-réglage en cours de production. Pourtant il n'est pas possible de contrôler les mêmes faces au cours de la production qu'en réglage initial ou complet.

En effet, au cours de la production, certaines faces ébauchées disparaissent en cours d'usinage et leur position ne peut donc plus être vérifiée à l'issue de la prise de pièce.

De plus, les méthodes actuelles ne donnent pas d'indication sur l'ordre de montage des outils dans la machine. Ceci entraine des variabilités de temps de réglage entre opérateurs puisque chacun fait comme bon lui semble, selon ses compétences et son expérience.

Enfin, les méthodes Bourdet et Wade ne prévoient pas d'assistance au régleur pour l'aider à corriger les écarts systématiques sur les cotes de fabrication.

Une autre difficulté rencontrée dans le réglage des machines concernent le séquençage des opérations de fabrication.

Les méthodes de détermination des cotes de fabrication présentées précédemment ont été conçues à une époque où les pièces devaient passer sur plusieurs machines-outils pour être réalisées. Elles transitaient entre ces machines par lots. Aujourd'hui, elles sont de plus en plus réalisées entièrement dans la même machine avec éventuellement des changements de prises-de-pièces automatiques.

Néanmoins, dans les deux cas de modes de transfert, on peut distinguer deux situations de réglage des outils de la machine par mesurage de la pièce :

- La première, en réglage initial, pour régler l'ensemble des outils et fabriquer une "première pièce bonne",
- La seconde, en cours de production pour le re-réglage des outils des faces subsistantes à l'issue d'une étape.

Il est clair que les cotes de fabrication qui ont permis de régler initialement la position des faces ébauchées, ne peuvent plus être mesurées sur la pièce finie. Par conséquent le système de cotes de fabrication n'est pas le même selon qu'on soit en réglage initial ou en re-réglage en cours de production.

Cette distinction des situations n'existe pas dans les deux méthodes de détermination des cotes de fabrication présentées précédemment. Elles ne prévoient qu'un seul jeu de cotes de fabrication.

De plus elles n'explicitent pas clairement les moments auxquels la pièce doit être mesurée.

Remarquons tout d'abord que cette notion d'interruption de la fabrication pour mesurer la pièce n'est clairement explicitée dans aucune des méthodes académiques. Elles se contentent d'introduire la notion d'étapes de fabrication. En fait ces étapes donnent lieu chacune à un contrôle de la pièce.

Le séquençage des étapes de fabrication proposé par ces méthodes est lui-même discutable : Dans les deux méthodes il correspond systématiquement aux prises-de-pièces (bien que cela ne soit pas dit explicitement) : A chaque prise-de-pièce correspond une étape de fabrication.

Or d'une part, cela peut ne pas être possible et d'autre part cela peut ne pas être justifié.

En effet si la pièce change de prise-de-pièce à l'intérieur d'une machine automatique, comme c'est le cas en décolletage, il n'est pas possible en production, d'interrompre la fabrication pour mesurer la pièce entre les deux prises-de-pièces. Le séquençage du processus de fabrication suivant les prises-de-pièces est dans ce cas impossible.

D'autre part, et par extension du cas précédent, si une pièce transite en flux tendu entre deux prises-de-pièces, éventuellement sur deux machines différentes, il n'est peut être pas utile d'ajouter un contrôle de la pièce entre ces deux prises-de-pièces si toutes les surfaces qu'elles réalisent peuvent être contrôlées à l'issue de la dernière.

On voit donc qu'il n'y a pas forcément concordance entre prise-de-pièce et étape de fabrication contrairement à ce qui est suggéré par les méthodes académiques : Il peut y avoir plusieurs étapes pour une même prise-de-pièce ou plusieurs prises-de-pièces dans une même étape.

La présente invention vise à pallier au moins partiellement aux inconvénients précités en fournissant un procédé de préparation de réglage des outils d'un processus de fabrication permettant d'identifier les moments des mesurages des pièces à fabriquer, d'en minimiser le nombre et d'assister à identifier un jeu de cotes de fabrication optimal vis-à-vis des cotes-études et des cotes-méthodes.

Selon un autre aspect, l'invention vise à fournir une aide au régleur pour corriger les écarts constatés sur les cotes de fabrication.

Ainsi, l'invention a pour objet un procédé de préparation des réglages d'outils, les outils étant destinés à réaliser un ensemble d'opérations de fabrication pour l'obtention d'une série de pièces et pouvant appartenir à une ou plusieurs machines-outils, procédé dans lequel, à partir de l'identification des faces destinées à être réalisées par les outils et de la connaissance de cotes-études et de cotes-méthodes :

- on modélise le processus de fabrication de façon arborescente par sa décomposition en postes de fabrication, en prises-de-pièces, en opérations de fabrication ou de posage et en faces fabriquées ou posées,
- on construit une gamme d'étapes de réglage et une gamme d'étapes de surveillance des opérations de fabrication,
- pour chacune des deux gammes, on génère respectivement un ensemble de cotes de fabrication,
- pour l'ensemble des cotes de fabrication d'une gamme, on génère un ensemble associé de cotes pilotes,
- on génère pour chacune des deux gammes, des relations de calcul pour chaque étape de réglage ou de surveillance, permettant de calculer les corrections des cotes-pilotes en fonction des écarts constatés sur les cotes de fabrication mesurées.

Ce procédé peut comporter une ou plusieurs des caractéristiques suivantes prises seules ou en combinaison :

- on prend en compte deux modes de transfert entre prises-de-pièces, un mode de transfert en flux tendu et un mode de transfert par lot,
- on prend en compte, pour une prise-de-pièce, une opération de posage sur une ou plusieurs faces de la pièce suivi d'une ou de plusieurs opérations de fabrication réalisant chacune une plusieurs faces,
- préalablement à la génération des gammes d'étapes de réglage et de surveillance, on génère une gamme d'étapes de flux en tenant compte des modes de transfert entre prises-de-pièces successives et de la capacité à régler leurs outils simultanément, chaque étape de flux pouvant rassembler plusieurs prises-de-pièces,
- on regroupe plusieurs prises-de-pièces consécutives, en une seule étape de flux si le transfert entre ces prises-de-pièces se fait en flux tendu et si on a la maîtrise simultanée des réglages des opérations de fabrication et de posage réalisées dans ces prises-de-pièce,
- une étape de flux est transformée en une étape de surveillance, si au moins une des faces, de position connue par rapport aux prises-de-pièces de l'étape de flux, est aussi de position connue dans l'étape de flux suivante et subsiste à l'issue de cette dernière,
- on séquence les opérations de fabrication et /ou de posage de chaque étape de flux en un nombre minimale d'étapes de réglage en vérifiant que pour chacune des étapes de réglage, toutes les faces posées ou usinées dans l'étape, et donc de positions connues, par rapport aux prises-de-pièces de l'étape, subsistent toutes à l'issue de cette étape, et si au moins une de ces faces est aussi de position connue dans l'étape de réglage suivante et subsiste à l'issue de cette dernière,
- parmi l'ensemble des chaînes possibles de cotes de fabrication permettant, de mesurer directement ou indirectement chaque cote-étude et chaque cote-méthode, on retient la chaine dont les cotes de fabrication ont des incertitudes de mesure dont la somme est minimale,
- pour la gamme d'étape de réglage et la gamme d'étape de surveillance, on supprime, dans l'ensemble des cotes de fabrication respectif, les boucles de cotes en recherchant pour chaque ensemble l'arbre recouvrant des cotes de fabrication dont la somme des incertitudes de mesure est minimale,
- une cote-pilote est une cote-outil reliant deux des faces réalisées par un outil,
- parmi l'ensemble des chaînes possibles de cotes-pilotes de chaque étape de flux de la gamme d'étape de réglage et de la gamme d'étape de surveillance, permettant de régler directement ou indirectement chaque cote de fabrication, on retient la chaine dont les cotes-pilotes ont des incertitudes de réglage dont la somme est minimale,
- pour chaque étape de flux de la gamme d'étape de réglage et de la gamme d'étape de surveillance, on supprime, dans l'ensemble des cotes-pilote respectif, les boucles de cotes en recherchant pour chaque ensemble, l'arbre recouvrant des cotes-pilote dont la somme des incertitudes de réglage est minimale.

L'invention concerne également un procédé de réglage d'outils, les outils étant destinés à réaliser un ensemble d'opérations de fabrication pour l'obtention d'une série de pièces et pouvant appartenir à une ou plusieurs machines-outils, procédé dans lequel, à partir de l'identification des faces destinées à être réalisées par les outils et de la connaissance de cotes-études et de cotes-méthodes :

- on met en oeuvre le procédé de préparation des réglages d'outils tel que défini ci-dessus,
- on réalise des pièces de réglage selon la gamme d'étapes de réglage,
- on mesure sur ces pièces les cotes de fabrication à chaque étape de réglage, et
- on règle les outils en tenant compte des cotes-pilotes selon les dites relations de calcul.

Selon un aspect, on mesure les cotes de fabrication de la gamme d'étapes de surveillance d'une pièce issue de la production et on ajuste le réglage des outils selon les relations de calcul des cotes-pilotes de la gamme d'étapes de surveillance.

L'invention a également pour objet un dispositif de préparation des réglages d'outils, les outils étant destinés à réaliser un ensemble d'opérations de fabrication pour l'obtention d'une série de pièces et pouvant appartenir à une ou plusieurs machines-outils, le dispositif comprenant des moyens de traitement configurés pour, à partir de l'identification des faces destinées à être réalisées par les outils et de la connaissance de cotes-études et de cotes-méthodes :

- modéliser le processus de fabrication de façon arborescente par sa décomposition en postes de fabrication, en prises-de-pièces, en opérations de fabrication ou de posage et en faces fabriquées ou posées,
- construire une gamme d'étapes de réglage et une gamme d'étapes de surveillance des opérations de fabrication,
- générer pour chacune des deux gammes, respectivement un ensemble de cotes de fabrication,
- générer pour l'ensemble des cotes de fabrication d'une gamme, un ensemble associé de cotes pilotes,
- générer pour chacune des deux gammes, des relations de calcul pour chaque étape de réglage ou de surveillance, permettant de calculer les corrections des cotes-pilotes en fonction des écarts constatés sur les cotes de fabrication mesurées.

Et enfin, l'invention a pour objet une machine-outil, **caractérisée en ce qu'**elle est équipée d'un dispositif de préparation des réglages d'outils tel que défini ci-dessus.

D'autres avantages et caractéristiques apparaîtront à la lecture de la description de l'invention, ainsi que des dessins annexés sur lesquels :

- la figure 1 montre un dessin de définition d'une pièce épaulée,

- la figure 2 montre un organigramme du procédé de préparation selon l'invention,

- la figure 3 montre un schéma synoptique d'organisation du processus de fabrication d'une pièce,

- la figure 4 montre un exemple d'un schéma synoptique d'organisation du processus de fabrication d'une pièce pour la pièce épaulée de la figure 1,

- la figure 5 montre un exemple d'un schéma synoptique d'organisation en étapes de flux du processus de fabrication d'une pièce pour la pièce épaulée de la figure 1,

- la figure 6 montre le dessin de définition d'une pièce épaulée selon la figure 1 associé à un diagramme de flux,

- la figure 7 montre le dessin de définition d'une pièce épaulée selon la figure 1 associé à un diagramme de surveillance,

- la figure 8 montre le dessin de définition d'une pièce épaulée selon la figure 1 associé à un diagramme de réglage,

- la figure 9 montre une représentation du diagramme de réglage sous forme d'un graphe avec les cotes de fabrication potentielles,

- la figure 10 montre une représentation du diagramme de réglage sous forme d'un graphe avec des incertitudes de mesure,

- la figure 11 montre une représentation du diagramme de réglage sous forme d'un graphe avec les cotes de fabrication potentielles avec les cotes de fabrications retenues,

- la figure 12 montre une représentation sous la forme d'un graphe des cotes de fabrications retenues avec leurs incertitudes de mesure pour la suppression de boucles dans les cotes de fabrication,

- la figure 13 montre pour chaque étape de flux pour la fabrication de la pièce épaulée de la figure 1 un graphe de cotes pilotes en montrant en plus les cotes de fabrication,

- la figure 14 montre des exemples de dessins de fabrication issus de l'invention avec les cotes pilotes et les cotes de fabrication,

- la figure 15 est un schéma synoptique d'un dispositif de préparation de réglage selon l'invention,

- la figure 16 est un organigramme d'un procédé de réglage selon l'invention,

- la figure 17 est un schéma simplifié chronologique pour montrer l'application de l'invention dans un processus de fabrication de pièces,

Le document de priorité est intégré par référence dans son intégralité dans le présent exposé.

Dans la présente invention, le vocabulaire est en partie emprunté de la norme AFNOR « Dessins techniques : Principes généraux cotation et tolérancement représentation simplifiée et particulière », Recueil de normes françaises, Tome 1, AFNOR, 1991, ce document étant incorporé par référence.

Parmi les différentes cotes, on distingue

- une cote-étude (CE) : cote établie par exemple par un bureau d'études. Elle se rapporte à une taille (diamètre, angle de cône), une distance ou un angle. Cette cote peut devoir être remplacée pour la fabrication par une ou plusieurs cotes de fabrication.
- une cote-méthode (CM) : cote positionnant une face ébauchée par rapport à une autre face ébauchée ou par rapport à la face finie. Ces cotes-méthodes définissent des surépaisseurs d'usinage.
- une cote de fabrication (CF) : cote utilisée en réglage initial ou complet ainsi qu'en surveillance pour mesurer une distance sur la pièce,
- une cote-pilote (CP) : cotes utilisés en réglage ou en surveillance (cote pilote de réglage ou cote pilote de surveillance) qui permettent de modifier en relatif la position des outils par rapport à la trajectoire ou la distance entre les faces réalisées par un même outil. Une cote pilote est déterminée pour permettre de corriger la valeur des cotes de fabrication. Elle correspond soit à un correcteur outil, soit à une cote outil/programme, qui sont effectivement des paramètres à piloter du procédé pour réduire les écarts constatés sur les cotes de fabrication.
- une boucle de cotes : des cotes entre faces forment une ou plusieurs boucles si elles positionnent de façon redondante ces faces. Elles sont alors en nombre égale ou supérieur au nombre de faces.

Les cotes de fabrication (CF) sont les cotes à contrôler à chaque étape de la production et sont indiquées sur les différents dessins de fabrication donnée au régleur. Le jeu de cotes de fabrication est déterminé à partir des cotes-études (CE) issues du dessin de définition et des cotes-méthodes (CM), généralement liées aux surépaisseurs d'usinage.

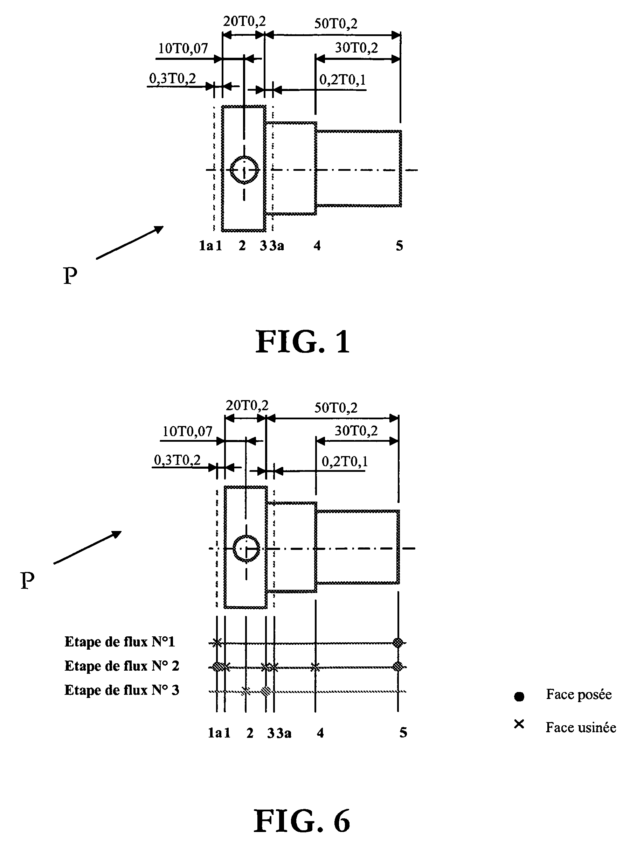

Le procédé selon l'invention sera expliqué à titre d'exemple à l'aide d'une pièce épaulée P telle que représentée à la figure 1.

Cette pièce P est constituée de quatre faces usinés référencées 1, 3, 4, et 5 ainsi que d'un perçage référencé 2. Adoptant une cotation (en mm) en valeur moyenne de l'intervalle de tolérance, il devient possible d'indiquer directement la valeur de la tolérance, en la faisant précéder de la lettre « T » comme le montre la figure 1. Sur la figure 1 sont aussi représentées les surépaisseurs d'usinage. Elles sont référencées par le même numéro de référence que la face à laquelle elles se rapportent suivi d'une lettre minuscule, comme par exemple 1a ou 3a. Elles sont choisies par un préparateur méthode en fonction du processus de fabrication retenu.

Pour la clarté de l'exposé, les notions suivantes sont adoptées :

- i, j sont des nombres naturels désignant une face (par exemple face 1 et 5 de la figure 1),

- k est un nombre naturel désignant une étape de fabrication du procédé,

- $CE_{i-j}$ - cote-études à respecter entre les faces i et j,

- $T_{CEi-j}$ - tolérance associée à la cote-étude $CE_{i-j}$,

- $\ell_{CEi-j}$ - écart constaté sur la cote-étude $CE_{i-j}$,

- $CM_{i-j}$ - cote-méthodes à respecter entre les faces i et j,

- $T_{CMi-j}$ - tolérance associée à la cote-méthodes $CM_{i-j}$,

- $\ell_{CMi-j}$ - écart constaté sur la cote-méthodes $CM_{i-j}$.

- $CF_{i-j,k}$ - cote de fabrication entre les faces i et j à l'étape de fabrication k,

- $T_{CFi-j}$ - tolérance associée à la cote de fabrication $CF_{i-j}$,

- $\ell_{CFi-j}$ - écart constaté sur la cote de fabrication $CF_{i-j}$,

Pour les cotes pilotes, on adopte la notation suivante :

$C_{i,k}$ - correcteur outil réalisant la face i à l'étape de fabrication k,
- $C_{i-j,k}$ - cote / outil programme réalisant les faces i et j à l'étape k,
- $\ell_{Ci,k}$ - écart sur le correcteur outil $C_{i,k}$,
- $\ell_{Ci-j,k}$ - écart sur la cote outil/ programme $C_{i-j,k,}$

Par la suite, on décrira le procédé de préparation des réglages d'outils d'une part des positions des outils par rapport à leurs trajectoires et d'autre part des géométries de leurs arrêtes de coupe de façon générale et illustrée à l'aide de la pièce représentée sur la figure 1.

Comme cela a été expliqué auparavant, le procédé selon l'invention vise à déterminer un séquençage, c'est-à-dire une gamme d'étapes, optimal des opérations de fabrication nécessaires d'une part, au réglage initial et régulier des machines-outils, appelée gamme de réglage par la suite, et d'autre part au suivi de la production, appelée gamme de surveillance par la suite.

Les cotes-études et cotes-méthodes sont des données d'entrée pour le procédé selon l'invention.

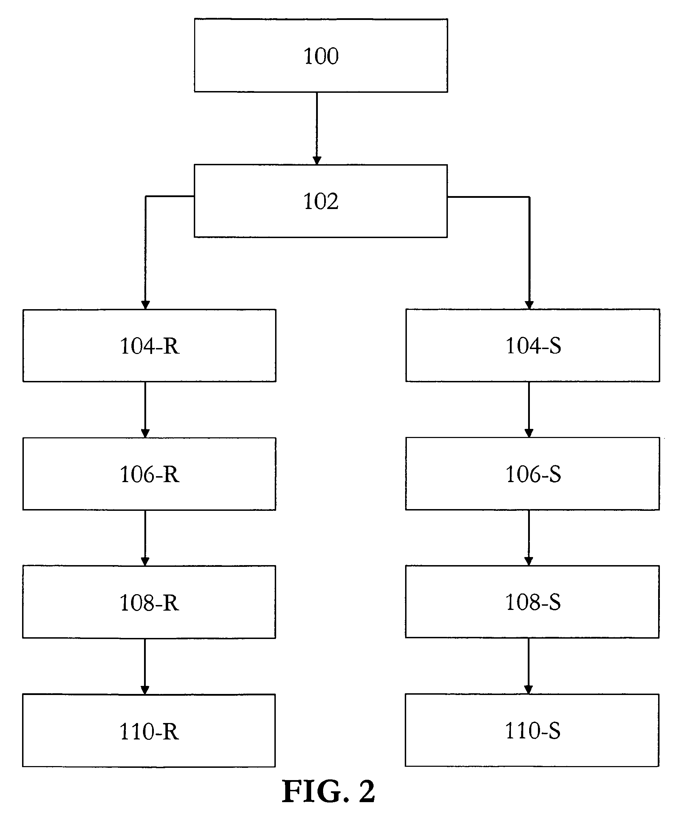

Un organigramme du procédé selon l'invention est représenté sur la figure 2.

A partir de l'identification des faces destinées à être réalisées par les outils et de la connaissance de cotes-études et de cotes-méthodes, lors d'une étape 100, on modélise le processus de fabrication de façon arborescente par sa décomposition en postes de fabrication, en prises-de-pièces, en opérations de fabrication ou de posage et en faces fabriquées ou posées.

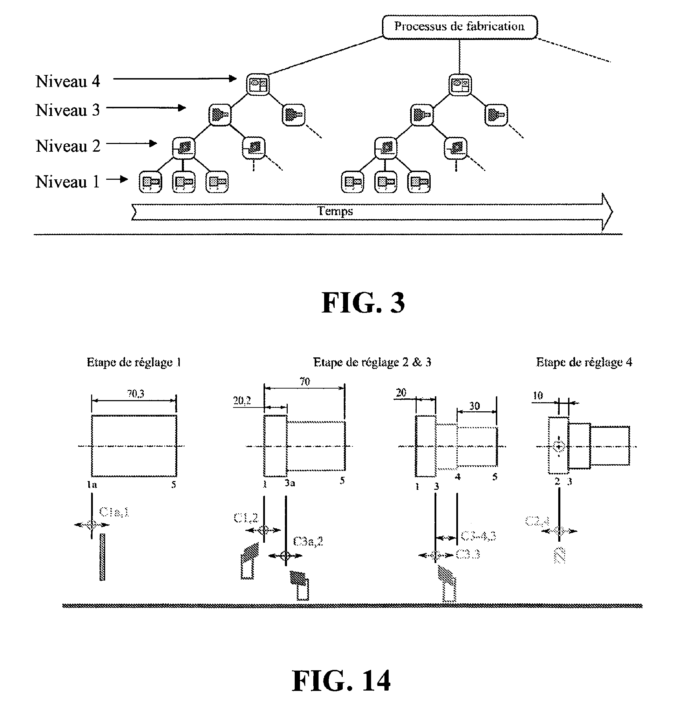

Cette décomposition est représentée de façon schématique sur la figure 3.

Sur cette figure, on a représenté de façon arborescente le processus de fabrication avec en horizontal la chronologie des opérations.

Le niveau 1 décrit la séquence des faces usinées ou posées.

Le niveau 2 décrit la séquence des opérations de fabrication ou de posage.

Une opération de fabrication est une action d'un outil sur la pièce à fabriquer. Il s'agit de la plus petite entité de fabrication qui est caractérisée par le fait que d'une part, il n'est pas possible de l'arrêter pour effectuer un contrôle et d'autre part, elles ont souvent des contraintes chronologiques entre elles dont il faut tenir compte. En usinage, une opération de fabrication est l'action d'un outil de coupe entre l'instant où il part vers la pièce et l'instant où il en revient. Il réalise une ou plusieurs faces de la pièce. Aussi, du point de vue descriptif, une opération de fabrication contient une ou plusieurs faces, comme cela est illustré sur la figure 3.

Le niveau 3 décrit la séquence des prises-de-pièces.

Pour permettre son usinage, la pièce doit être maintenue dans la machine outil. On utilise en général pour cela un porte-pièce solidaire de la machine outil.

On appelle prise-de-pièce le fait que la pièce soit maintenue dans une position connue dans la machine-outil. Il est important de noter que pour la présente invention, le fait de démonter et de remonter la pièce dans le même porte-pièce ne change pas sa prise-de-pièce. En effet, même si cela modifie légèrement la position de la pièce dans la machine, on ne saurait en tenir compte pour le réglage des outils qui ne concernent que les écarts systématiques des outils et pas des écarts aléatoires.

Toute opération de fabrication appartient forcement à une prise-de-pièce. Il faut en général plusieurs prises-de-pièces pour fabriquer un produit. Ce niveau supérieur d'organisation (niveau 2) d'un processus de fabrication est nécessaire au séquençage d'un processus de fabrication.

Enfin, le niveau 4 décrit la séquence des postes de fabrication.

Le poste de fabrication est le dernier niveau hiérarchique. C'est un lieu ou une machine dans l'atelier ayant ses propres ressources matérielles. Il peut comporter plusieurs prises-de-pièces pour réaliser ses opérations de fabrication.

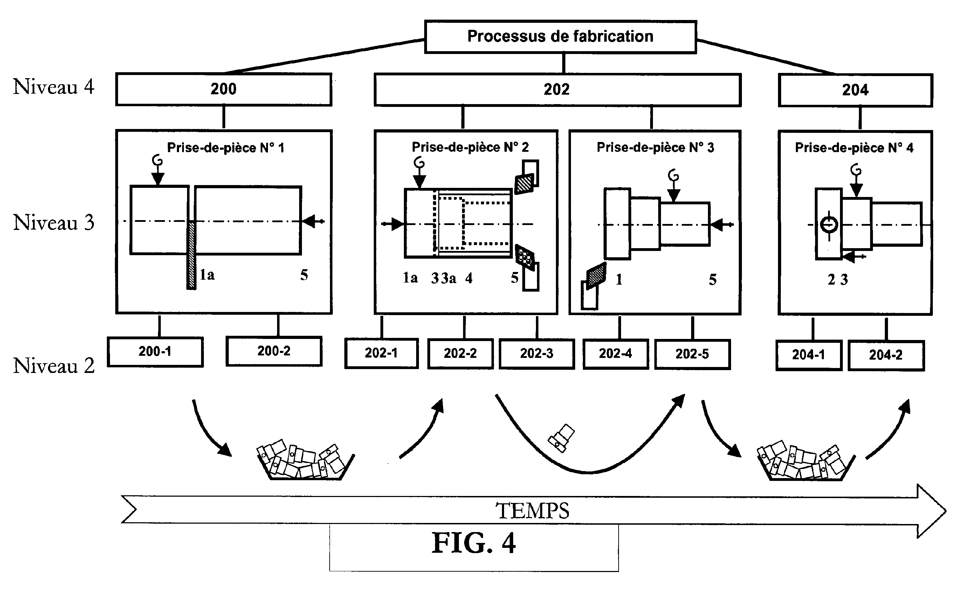

A titre d'exemple et comme représentée schématiquement sur la figure 4, on considère que la pièce épaulée P de la figure 1 est obtenue au travers de trois postes de fabrication : une débiteuse 200, un tour conventionnel 202 et une fraiseuse 204.

Dans le premier poste, la débiteuse 200, on a une seule prise-de-pièce N°1, dans le second, le tour conventionnel 202, on a deux prises-de-pièces, N°2 et N°3 et dans le troisième, la fraiseuse 204, on a une seule prise-de-pièce N°4.

Dans la prise-de-pièce N° 1, on a deux opérations élémentaires de fabrication : un posage 200-1 et une opération de sciage 200-2.

Dans la prise-de-pièce N° 2, on a trois opérations élémentaires : une opération de posage 202-1, une opération d'ébauche 202-2 avant et une opération de finition avant 202-3.

Dans la prise-de-pièce N°3, on a deux opérations élémentaires : une opération de posage 202-4 et une opération de dressage arrière 202-5.

Dans la prise-de-pièce N° 4, on a deux opérations élémentaires : une opération de posage 204-1et une opération

de perçage 204-2.

Ainsi, on prend en compte, pour une prise-de-pièce, une opération de posage sur une ou plusieurs faces de la pièce suivi d'une ou de plusieurs opérations de fabrication réalisant chacune une ou plusieurs faces.

L'opération de posage 200-1 de la prise-de-pièce N°1 se fait sur la face 5. L'opération de sciage 200-2 réalise la face ébauche 1a. L'opération de posage 202-1 de la seconde prise-de-pièce se fait sur la face 1a. L'opération d'ébauche avant 202-2 réalise la face ébauche 3a. L'opération de finition 202-3 avant réalise les faces 3 et 4. L'opération de posage 202-4 de la prise-de-pièce N° 3 se fait sur la face 5. L'opération de dressage 202-5 arrière réalise la face finie 1. L'opération de posage 204-1 de la prise-de-pièce N°4 se fait sur la face 3. L'opération de perçage 204-2 réalise le trou d'axe 2.

Par ailleurs, on a également indiqué sur la figure 4 le mode de transfert des pièces P entre prise-de-pièce. Entre la prise-de-pièce N°1 et la prise-de-pièce N°2, un lot de pièces est constitué. Entre la prise-de-pièce N°2 et la prise-de-pièce N°3, les pièces P transitent en flux tendu et on a la maîtrise simultanée des réglages des deux prise-de-pièces. Entre la prise-de-pièce N°3 et la prise-de-pièce N°4, un lot de pièces est constitué.

En revenant vers la figure 2, la prochaine étape 102 consiste à déterminer le séquençage des opérations de fabrication pour le réglage initial ou régulier des machine-outils, ainsi que pour le suivi de production, ce sont la gamme d'étapes de réglage et la gamme d'étape de surveillance.

La gamme d'étapes de réglage est destinée au réglage initial et régulier des machines-outils et permet de contrôler la position de toutes les faces, qu'elles soient finies ou ébauchées.

La gamme d'étapes de surveillance est destinée au réglage des machines-outils en production et permet de contrôler principalement la position des faces finies.

Pour ce faire, à l'étape 102, on génère une gamme d'étapes de flux en tenant compte des modes de transfert entre prises-de-pièces successives et de la capacité à régler leurs outils simultanément, chaque étape de flux pouvant rassembler plusieurs prises-de-pièces.

En particulier, on regroupe plusieurs prises-de-pièces consécutives, en une seule étape de flux si le transfert entre ces prises-de-pièces se fait en flux tendu et si on a la maîtrise simultanée des réglages des opérations de fabrication et de posage réalisées dans ces prises-de-pièce.

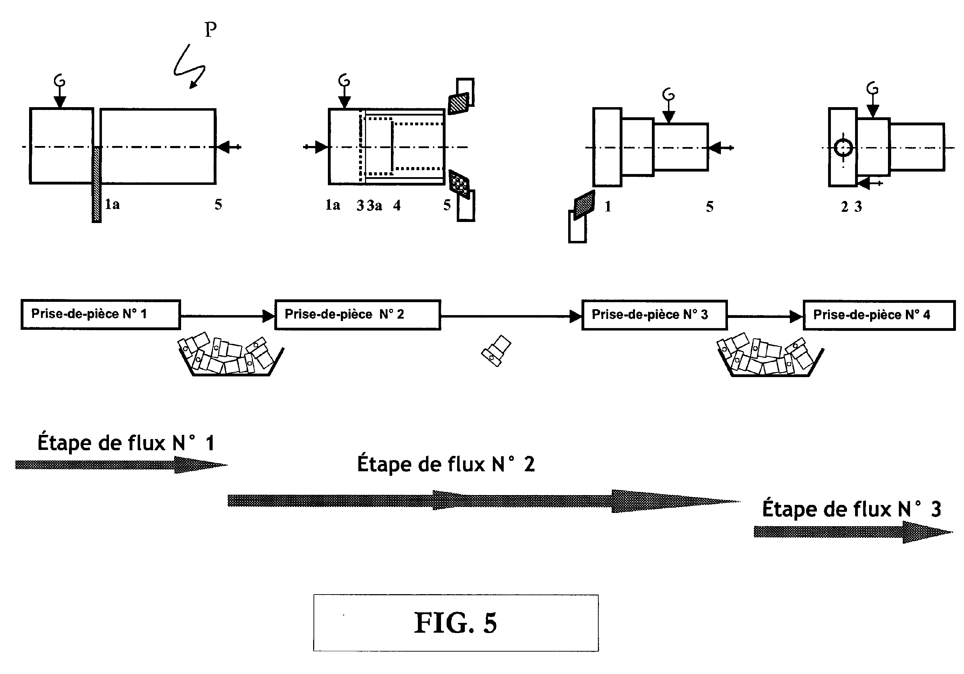

Pour le processus de fabrication retenu pour la pièce épaulée, la gamme d'étapes de flux est représentée sur la figure 5 avec les étapes de flux : un premier lot est constitué après la prise-de-pièce N° 1 ce qui oblige à clore la première étape de flux N° 1.

Les pièces transitent ensuite en flux tendu entre les prise-de-pièces N° 2 et N° 3 et celles-ci peuvent être simultanément réglées ce qui permet de les regrouper dans la même deuxième étape de flux N° 2. Un lot est constitué à l'issue de l'étape de flux 3, ce qui oblige à clore l'étape de flux N° 2. Enfin une troisième étape de flux N° 3 est créée pour la dernière prise-de-pièce N°4 à l'issue de laquelle un lot est constitué.

Le séquencement des opérations de fabrication en étapes de flux peut être représenté sous la forme d'un diagramme (voir figure 6), appelé par la suite diagramme des flux, représentant par des lignes les étapes de flux et par des croix ou des points les faces usinées ou respectivement posées.

Puis, lors des étapes 104-R et 104-S, on construit une gamme d'étapes de réglage et une gamme d'étapes de surveillance des opérations de fabrication.

Plus précisément, à partir de la gamme d'étapes de flux, on détermine la gamme d'étapes de surveillance de la façon suivante :

Pour générer la gamme de surveillance ayant un nombre minimal d'étapes de surveillance, chaque étape de flux est transformée en étape de surveillance si au moins une des faces de position connue (sous-entendu à sa dispersion aléatoire près) par rapport aux prise-de-pièces de l'étape de flux, soit aussi de position connue dans l'étape de flux suivante et subsiste à l'issue de cette dernière de façon à ce que les cotes de fabrication qui seront mesurées à l'issue de chacune de ces étapes aient en commun une face.

De plus:

- Pour chaque étape de flux, on supprime dans le diagramme toutes les faces actives (face posée ou usinée) qui disparaissent par les opérations d'usinage effectuées dans l'étape de flux concernée,
- Si deux étapes de flux consécutives n'ont aucune face active en commun, le positionnement relatif de la pièce est perdu entre les étapes (pas de transfert de cotes possibles simultanément sur les deux étapes de flux). On supprime alors toutes les étapes antérieures à la seconde étape de flux.
- On supprime les faces qui ne sont jamais actives dans aucune étape de flux.
- On supprime les cotes-études ou -méthodes qui positionnent des faces ayant disparues du diagramme de surveillance.

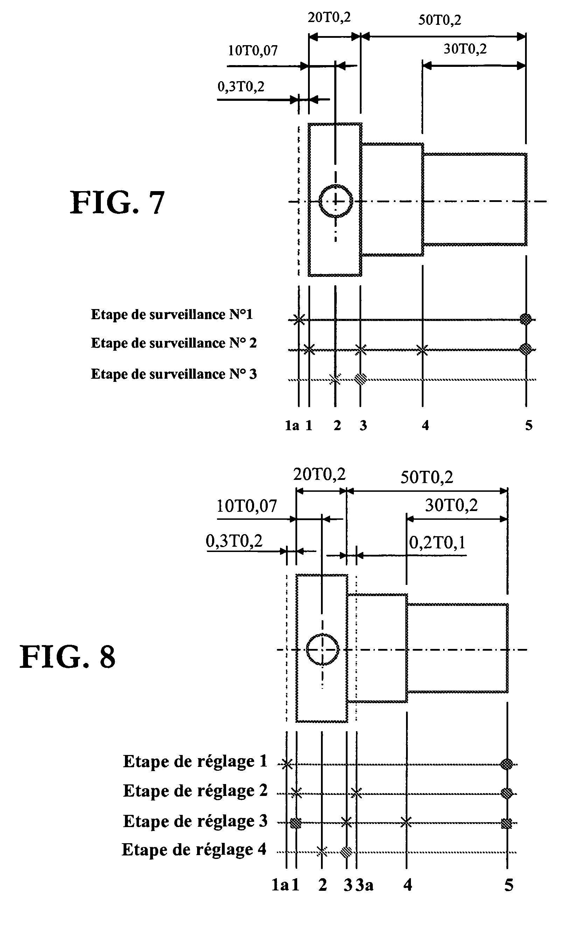

Les faces qui sont supprimées par les opérations de fabrication de chaque étape de flux sont supprimées du diagramme des flux. Ici seules les faces 1a et 3a sont supprimées de l'étape de flux 2 (voir figure 7).

La face 5 est de position connue dans l'étape de surveillance 1 et dans l'étape de surveillance 2 à l'issue de laquelle elle subsiste. La face 3 est de position connue dans l'étape de surveillance 2 et dans l'étape de surveillance 3 à l'issue de laquelle elle subsiste. Donc chaque étape de flux devient étape de surveillance.

A partir de la gamme d'étapes de flux, on détermine aussi la gamme d'étapes de réglage de la façon suivante :

Pour générer la gamme d'étapes de réglage ayant un nombre minimal d'étapes de réglage, on séquence les opérations de fabrication et /ou de posage de chaque étape de flux en un nombre minimale d'étapes de réglage en vérifiant que pour chacune des étapes de réglage, toutes les faces posées ou usinées dans l'étape, et donc de positions connues par rapport aux prises-de-pièces de l'étape, subsistent toutes à l'issue de cette étape (condition 1), et qu'au moins une de ces faces est aussi de position connue dans l'étape de réglage suivante et subsiste à l'issue de cette dernière (condition 2) de façon à ce que les cotes de fabrication qui seront mesurées à l'issue de chacune de ces étapes aient en commun une face.

Le diagramme des flux présenté en figure 6 permet de générer suivant ces deux conditions le diagramme de réglage de la figure 8.

L'étape de flux 1 devient directement l'étape de réglage N° 1. L'étape de flux 2 se scinde en deux étapes de réglage N° 2 et N° 3.

L'étape de flux 3 devient directement l'étape de réglage N° 4. Les carrés sur le diagramme de la figure 8 représentent les faces qui subsistent à l'issu de l'étape et qui était de position connue à l'étape précédente. Les points, les croix et les carrés serviront par la suite à l'établissement des cotes de fabrication.

Toutes les faces de chaque étape de réglage subsistent (condition 1 respectée).

La face 5 de position connue dans l'étape de réglage N° 1, l'est aussi dans l'étape de réglage N°2. Les faces 1 et 5 de position connue dans l'étape de réglage N° 2 et le sont aussi dans l'étape de réglage N° 3. La face 3 de position connue dans l'étape de réglage N° 3, l'est aussi dans l'étape de réglage N° 4 (condition 2 respectée).

On séquence donc les opérations de fabrication et /ou de posage de chaque étape de flux en un nombre minimal d'étapes de réglage en vérifiant que pour chacune des étapes de réglage, toutes les faces posées ou usinées dans l'étape, et donc de positions connues, par rapport aux prises-de-pièces de l'étape, subsistent toutes à l'issue de cette étape, et qu'au moins une de ces faces est aussi de position connue dans l'étape de réglage suivante et subsiste à l'issue de cette dernière.

Puis, en référence à la figure 2, lors des étapes du procédé 106-R et 106-S, pour chacune des deux gammes, on génère respectivement un ensemble de cotes de fabrication (CF).

Etant donné que la façon d'obtenir des cotes de fabrication est identique pour la gamme d'étapes de réglage et pour la gamme d'étapes de surveillance, on ne détaillera ci-après que la façon pour obtenir les cotes de fabrication de la gamme d'étapes de réglage.

Dans un premier temps, on détermine des cotes de fabrication potentielles pour la gamme de réglage.

En effet, dans chaque étape de réglage, une cote de fabrication peut relier deux faces usinées dans l'étape ou une face usinée à une face de position déjà connue.

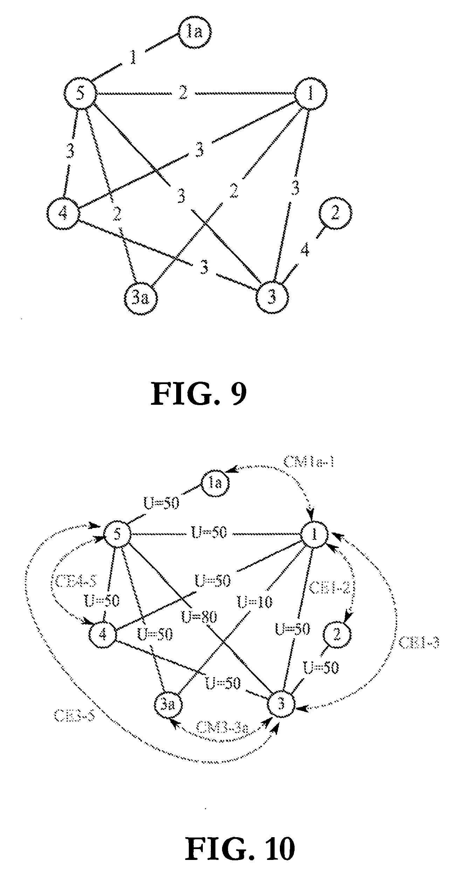

L'ensemble de ces possibilités constitue les cotes de fabrication potentielles de l'étape et peut être représenté par un graphe dans lequel les sommets correspondent aux faces de la pièce (chaque cercle comporte un numéro correspondant à une face de la pièce P) et les arrêtes (sous forme de traits), aux cotes de fabrication potentielles (voir figure 9). Les numéros sur les traits désignent l'étape de réglage.

Ainsi, la face 5 est par exemple reliée dans l'étape de réglage 2 aux faces 1 et 3a.

Puis, pour chaque cote-étude et chaque cote-méthode (voir figure 1), on détermine la chaine de cotes de fabrication potentielles reliant les deux faces de la cote-étude ou de la cote-méthode et dont la somme des incertitudes de mesure est minimale comme cela est représenté sur la figure 10.

A ce stade intervient une nouvelle notion pour la détermination du jeu de cotes de fabrication que sont les incertitudes de mesure.

En effet, on connaît les moyens de mesure à utiliser pour contrôler les cotes de fabrication et leur incertitude.

Cette incertitude peut varier en fonction du moyen de mesure utilisé.

Ceci est illustré à titre d'exemple sur la figure 10 sur laquelle les faces posées ou usinés sont désignées dans des cercles comme sur la figure 9. Ces faces sont de plus reliées d'une part par des arrêtes (voir figure 9) et à la place du N° de l'étape de réglage, on a indiqué l'incertitude U de mesure, par exemple en $\mu$m, entre deux faces.

Ainsi, par exemple, l'incertitude de mesure entre les faces 1 et 3a est U= 10$\mu$m et l'incertitude de mesure entres les faces 1 et 3 est de U=50$\mu$m.

D'autre part, par des flèches en trait pointillées reliant certaines faces, on a indiqué les cotes-études et les cotes-méthodes.

Ainsi, parmi l'ensemble des chaînes possibles de cotes de fabrication permettant de mesurer directement ou indirectement chaque cote-étude et chaque cote-méthode, on retient la chaine dont les cotes de fabrication ont des incertitudes de mesure dont la somme est minimale.

Pour l'exemple de la pièce épaulée P de la figure 1, cela se traduit de la façon suivante :

La cote-méthode $CM_{3-3a}$ ne peut pas être mesurée directement (les deux faces 3 et 3a ne coexistent à aucune étape de flux, ni de réglage).

Par contre, cette cote-méthode peut être mesurée indirectement par mesurage des cotes entre les faces 3a-1 puis 3-1 dont la somme des incertitudes de mesure est la plus petite possible.

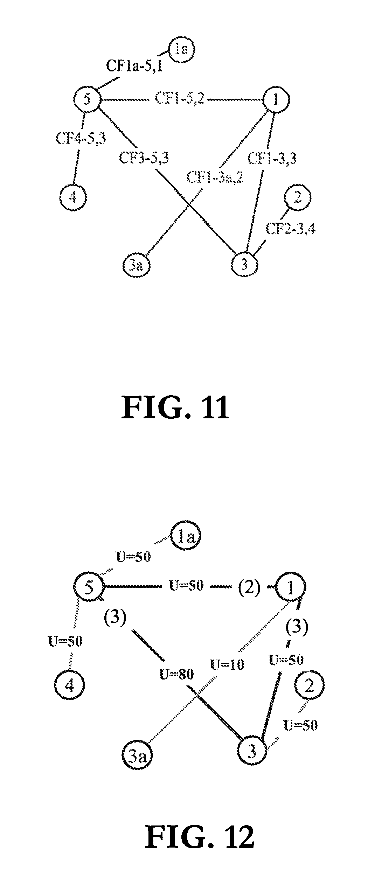

Par la détermination systématique des chaines de cotes de fabrication à incertitude de mesure minimale, on obtient le jeu de cotes de fabrications retenues pour la gamme d'étapes de réglage représenté sous forme d'un graphe sur la figure 11.

Les sommets désignant les différentes faces sont maintenant reliées par des traits portant la désignation des cotes de fabrication avec leur étape de réglage.

Par exemple, les faces 1 et 3a sont reliées par $CF_{1-3a, 2}$, c'est-à-dire une cote de fabrication entres les faces 1 et 3a qui peut être mesurée à l'étape de réglage N° 2.

Il est important de noter que selon les incertitudes de mesure des cotes de fabrication potentielles, la chaine de cotes de fabrication à incertitudes de mesure minimales peut être plus longue, en nombre de cotes, que la chaine obtenue par la méthode des chaines minimales.

Les chaînes de cotes, illustrées sur la figure 11, s'expriment par des équations qui peuvent être regroupées sous la forme matricielle suivante :

$$
\begin{bmatrix} CE_{1-2} \\ CE_{1-3} \\ CE_{3-5} \\ CE_{4-5} \\ CM_{1a-1} \\ CM_{3-3a} \end{bmatrix} = \begin{bmatrix} 0 & 0 & 0 & 0 & 0 & 1 & -1 \\ 0 & 0 & 0 & 0 & 0 & 1 & 0 \\ 0 & 0 & 0 & 1 & 0 & 0 & 0 \\ 0 & 0 & 0 & 0 & 1 & 0 & 0 \\ 1 & -1 & 0 & 0 & 0 & 0 & 0 \\ 0 & 0 & 1 & 0 & 0 & -1 & 0 \end{bmatrix} \begin{bmatrix} CF_{1a-5,1} \\ CF_{1-5,2} \\ CF_{1-3a,2} \\ CF_{3-5,3} \\ CF_{4-5,3} \\ CF_{1-3,3} \\ CF_{2-3,4} \end{bmatrix}
$$

$$[CE/CM] = [X][CF]$$

Où [CE/CM] est le vecteur des cotes-études et -méthodes,

[CF] est le vecteur des cotes de fabrication retenues et [X] est la matrice de passage reliant les cotes-études et -méthodes aux cotes de fabrication.

Ensuite, aussi bien pour la gamme d'étapes de réglage et que pour la gamme d'étapes de surveillance, on supprime, dans l'ensemble des cotes de fabrication respectif, les boucles de cotes en recherchant pour chaque ensemble l'arbre recouvrant des cotes de fabrication dont la somme des incertitudes de mesure est minimale.

Cette notion d'arbre recouvrant de poids minimal est un principe général bien connu en mathématique dans la théorie des graphes (arbre couvrant - on appelle arbre couvrant, les n-1 arrêtes reliant les n sommets d'un graphe. On dit de « l'arbre » qu'il « couvre » le graphe).

En se référant à la figure 12, pour la pièce épaulée P, on obtient un bouclage de cotes entre les faces 1, 3 et 5. Avec les incertitudes de mesure (U), la cote de fabrication reliant les faces 3 et 5 est supprimée en recherchant l'arbre recouvrant des cotes de fabrication à incertitudes minimales car elle présente la plus forte incertitude de mesure.

A l'issue des étapes 106-R et 106-S de la figure 2, on obtient donc une gamme d'étapes de réglage ainsi qu'une gamme d'étapes de surveillance avec leurs jeux associés de cotes de fabrication sans boucles.

Les étapes 106-R et 106S se poursuivent par les étapes 108-R et 108-S où pour l'ensemble des cotes de fabrication d'une gamme, on génère un ensemble associé de cotes pilotes.

Par la suite, on ne traitera que le cas de la gamme de réglage à titre d'exemple. La façon d'obtenir des cotes pilotes pour la gamme de d'étapes de surveillance est identique.

Comme cela a été défini ci-dessus, une cote pilote peut être :

- soit un correcteur de position de l'outil par rapport à sa trajectoire,
- soit une cote outil ou de programme reliant deux des faces réalisées par l'outil.

Un correcteur outil permet de corriger la position globale de l'outil.

Une cote outil/programme permet de corriger la forme intrinsèque de l'outil ou de la trajectoire outil.

Si l'outil d'une opération de fabrication réalise plusieurs faces, le correcteur de position de l'outil est associé à une de ces faces de sorte que les cotes de fabrication reliées à cette face sont directement dépendantes de ce correcteur. L'ensemble des correcteurs et des cotes outil ou de programme possibles constituent les cotes pilotes potentielles.

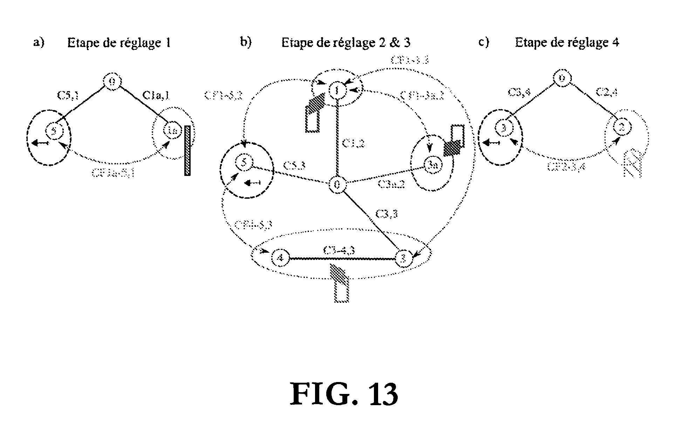

Pour la génération des cotes pilotes, on identifie d'abord des cotes pilotes potentielles pour chaque étape de flux, ce que l'on peut représenter sous forme de graphes (voir figure 13).

Pour ce faire, pour chaque étape de flux, on tient compte et on représente les faces de toutes les opérations d'usinage et de posage qui subsistent à l'issue de l'étape de flux.

Puis, on tient compte des correcteurs outils potentiels en reliant chaque face à une face fictive 0, correspondant aux référentiels fixes des prises-de-pièces de l'étape de flux.

Comme on le voit sur la figure 13, on obtient pour la pièce épaulée P trois graphes a), b) et c), un par étape de flux.

Un premier a) correspondant à l'étape de réglage N°1, un second b) correspondant aux étapes de réglage N°2 et N°3 et un troisième c) correspondant à l'étape de réglage N°4.

L'étape de réglage N° 1 possède deux cotes pilotes potentielles reliant chacune la face fictive 0 aux sommets 5 et 1a respectivement.

Les étapes de réglage N°2 et N°3 ont cinq cotes pilotes potentielles reliant chacune la face fictive 0 aux faces 1, 3a, 3, 4, et 5 respectivement ainsi qu'une cote pilote reliant les deux faces 3 et 4 réalisées par l'opération de finition avant. L'étape de réglage N°4 possède deux cotes pilotes potentielles reliant chacune la face fictive 0 aux faces 2 et 3 respectivement.

Puis, parmi l'ensemble des chaînes possibles de cotes-pilotes de chaque étape de flux de la gamme d'étapes de réglage et de la gamme d'étapes de surveillance, et pour chaque cote de fabrication, on retient la chaine dont les cotes-pilotes ont des incertitudes de réglage dont la somme est minimale.

Puis, pour chaque étape de flux de la gamme d'étape de réglage et de la gamme d'étapes de surveillance, on supprime, dans l'ensemble des cotes-pilote respectif, les boucles de cotes en recherchant pour chaque ensemble, l'arbre recouvrant des cotes-pilote dont la somme des incertitudes de réglage est minimale.

Dans cet exemple, toutes les cotes-pilotes potentielles sont ainsi retenues. Dans d'autres cas, certaines cotes-pilotes ne sont pas utilisées et on peut obtenir, comme pour les cotes de fabrication, des boucles de cotes-pilotes. On les supprimerait alors en recherchant l'arbre recouvrant des cotes-pilotes dont la somme des incertitudes de réglage est minimale.

Il se trouve que pour l'exemple de la pièce épaulée, il n'y a pas de boucle.

Une fois les cotes pilotes déterminées, ces dernières peuvent avantageusement pour le régleur par exemple être représentées sur les différents dessins de fabrication avec les cotes de fabrication, comme cela est montré sur la figure 14.

Cela permet ensuite, lors des étapes 110-R et 110-S de la figure 2 de générer pour chacune des deux gammes, des relations de calcul pour chaque étape de réglage ou de surveillance, permettant de calculer les corrections des cotes-pilotes en fonction des écarts constatés sur les cotes de fabrication mesurées.

Plus en détail, pour la gamme d'étapes de réglage (pour la gamme d'étapes de surveillance, la démarche est analogue), on procède comme suit :

Les équations reliant les écarts sur les cotes de fabrication aux écarts sur les cotes pilotes peuvent être écrites à partir des chaînes de cotes pilotes et ceci pour chaque étape de flux.

Etape de flux 1 (étape de réglage 1):

$$\left[ e_{CF_{1a-5,1}} \right] = \left[ -1 \quad +1 \right] \left[ \begin{matrix} e_{C_{1a,1}} \\ e_{C_{5,1}} \end{matrix} \right]$$

$$(\text{Équation 1})$$

Etape de flux 2 (étape de réglage 2 et 3):

$$\left[ \begin{matrix} e_{CF_{1-5,2}} \\ e_{CF_{1-3a,2}} \\ e_{CF_{1-3,3}} \\ e_{CF_{4-5,3}} \end{matrix} \right] = \left[ \begin{matrix} -1 & 0 & +1 & 0 & 0 \\ -1 & +1 & 0 & 0 & 0 \\ -1 & 0 & 0 & +1 & 0 \\ 0 & 0 & +1 & -1 & -1 \end{matrix} \right] \left[ \begin{matrix} e_{C_{1,2}} \\ e_{C_{3a,2}} \\ e_{C_{5,3}} \\ e_{C_{3,3}} \\ e_{C_{3-4,3}} \end{matrix} \right]$$

$$(\text{Équation 2})$$

Etape de flux 3 (étape de réglage 4):

$$\left[ e_{CF_{2-3,4}} \right] = \left[ -1 \quad +1 \right] \left[ \begin{matrix} e_{C_{2,4}} \\ e_{C_{3,4}} \end{matrix} \right]$$

$$(\text{Équation 3})$$

On note que ces relations entre les écarts sur les cotes de fabrication et les cotes pilotes sont écrites par étape de flux et non par étape de réglage étant donné qu'un même régleur détient la capacité de régler pour toutes les opérations de fabrication effectuées dans une même étape de flux. C'est pourquoi on a regroupé les étapes de réglage N° 2 et 3.

Afin de rendre le nombre de cotes pilotes égal au nombre de cotes de fabrication dans chaque étape de flux, une cote pilote est supprimée.

Ceci revient à figer, pour chaque étape de flux, un des correcteurs outils. De préférence, on choisira de figer des correcteurs de butées, souvent non réglables.

Cette opération permet de rendre les matrices de passage (voir équations 1, 2 et 3) carrées, ce qui permet de les inverser.

Pour l'exemple de la pièce épaulée, la cote pilote de la face 5 est supprimée à l'étape de flux 1 ainsi qu'à l'étape de flux 2 et la cote pilote de la face 3 est supprimée à l'étape de flux 3.

On peut donc récrire les équations définitives pour chaque étape de flux

Etape de flux 1 (étape de réglage 1) avec 1a face 5 figée :

$$\left[e_{CF_{1a-5,1}}\right] = \left[-1\right]\left[e_{C_{1a,1}}\right]$$

(Équation 4)

Etape de flux 2 (étape de réglage 2 et 3) avec 1a face 5 figée :

$$\begin{bmatrix} e_{CF_{1-5,2}} \\ e_{CF_{1-3a,2}} \\ e_{CF_{1-3,3}} \\ e_{CF_{4-5,3}} \end{bmatrix} = \begin{bmatrix} -1 & 0 & 0 & 0 \\ -1 & +1 & 0 & 0 \\ -1 & 0 & +1 & 0 \\ 0 & 0 & -1 & -1 \end{bmatrix} \begin{bmatrix} e_{C_{1,2}} \\ e_{C_{3a,2}} \\ e_{C_{3,3}} \\ e_{C_{3-4,3}} \end{bmatrix}$$

(Équation 5)

Etape de flux 3 (étape de réglage 4) avec 1a face 3 figée:

$$\left[e_{CF_{2-3,4}}\right] = \left[-1\right]\left[e_{C_{2,4}}\right]$$

(Équation 6)

En inversant ensuite le système d'équations (équations 4, 5 et 6) obtenu précédemment, on obtient l'ensemble des équations permettant de calculer les écarts des cotes pilotes en fonction des écarts des cotes de fabrication mesurées.
Les cotes pilotes (correcteurs et cotes outils ou programme) sont corrigés des valeurs opposées à leurs écarts.
Les relations obtenues pour la pièce épaulée sont les suivants :

Etape de flux 1 (étape de réglage 1):

$$\left[e_{C_{1a,1}}\right] = \left[-1\right]\left[e_{CF_{1a-5,1}}\right]$$

(Équation 7)

Etape de flux 2 (étape de réglage 2 et 3):

$$
\begin{bmatrix} e_{C_{1,2}} \\ e_{C_{3a,2}} \\ e_{C_{3,3}} \\ e_{C_{3-4,3}} \end{bmatrix} = \begin{bmatrix} -1 & 0 & 0 & 0 \\ -1 & +1 & 0 & 0 \\ -1 & 0 & +1 & 0 \\ +1 & 0 & -1 & -1 \end{bmatrix} \begin{bmatrix} e_{CF_{1-5,2}} \\ e_{CF_{1-3a,2}} \\ e_{CF_{1-3,3}} \\ e_{CF_{4-5,3}} \end{bmatrix}
$$

(Équation 8)

Etape de flux 3 (étape de réglage 4):

$$
\begin{bmatrix} e_{C_{2,4}} \end{bmatrix} = \begin{bmatrix} -1 \end{bmatrix} \begin{bmatrix} e_{CF_{2-3,4}} \end{bmatrix}
$$

(Équation 9)

Prenons un exemple concret pour l'étape de flux 2 de la gamme de réglage pour la pièce épaulée P.

Suite au mesurage des cotes de fabrication réalisées à l'étape de réglage 2, on obtient les écarts $e_{CF1\text{-}3a,2}$ = 0, 21 et $e_{CF1\text{-}5,2}$ = -0, 16 et suite au mesurage des cotes de fabrication réalisées à l'étape de réglage 3, les écarts $e_{CF1\text{-}3,3}$ = -0, 12 et $e_{CF4\text{-}5,3}$ = 0, 09 (voir équation 10). En introduisant ces valeurs dans l'équation 8 et en prenant les valeurs opposées aux écarts que le système permet de calculer sur les cotes-pilotes, on obtient les corrections à effectuer suivantes : $C_{1,2}$= -0,16, $C_{3a,2}$=-0,37, $C_{3,3}$=-0,04 et $C_{3\text{-}4,3}$ =0,13 (voir équation 11).

$$
\begin{bmatrix} e_{CF_{1-5,2}} \\ e_{CF_{1-3a,2}} \\ e_{CF_{1-3,3}} \\ e_{CF_{4-5,3}} \end{bmatrix} = \begin{bmatrix} -0,16 \\ 0,21 \\ -0,12 \\ 0,09 \end{bmatrix}
$$

(Équation 10)

$$\begin{bmatrix} C_{1,2} \\ C_{3a,2} \\ C_{3,3} \\ C_{3-4,3} \end{bmatrix} = \begin{bmatrix} -0,16 \\ -0,37 \\ -0,04 \\ 0,13 \end{bmatrix}$$

(Equation 11)

Il en résulte que par l'utilisation des relations de calcul pour chaque étape de réglage ou de surveillance, on permet de calculer les corrections des cotes-pilotes permettant d'annuler (aux dispersions aléatoires près) les écarts sur les cotes de fabrication.

Dans le présent exemple, cela permet de régler simultanément les positions de trois outils des étapes de réglage N° 2 et 3 par rapport à leurs trajectoires et d'autre part la trajectoire de l'outil de finition réalisant les faces 3 et 4.

On comprend donc que le procédé de préparation des réglages d'outils d'une part des positions des outils par rapport à leurs trajectoires et d'autre part des géométries de leurs arrêtes de coupe ou de leurs trajectoire permet une démarche systématique et rapide pour produire moins de pièces rebutées et pour diminuer le temps « mort » des machines dû au temps nécessaire pour le réglage des outils, soit en réglage complet (utilisation de la gamme d'étapes de réglage) soit en surveillance (utilisation de la gamme d'étapes de surveillance).

Bien que, pour des raisons d'explication des différentes étapes du procédé, des graphes, des dessins et des organigrammes ont été utilisées, ces étapes peuvent être entreprises par un calculateur (ordinateur) configuré et programmé à cet effet.

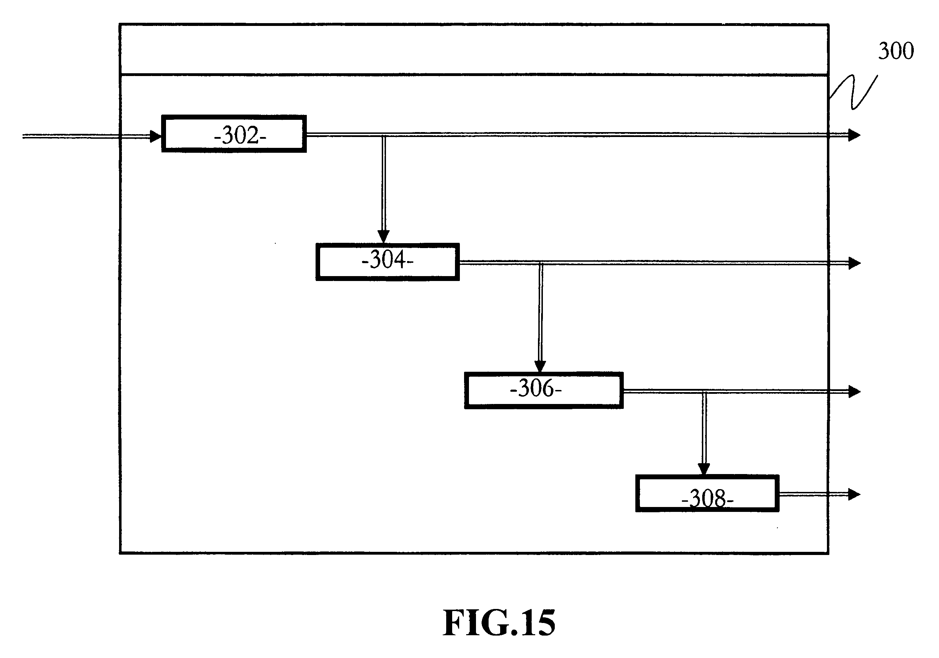

La figure 15 montre à titre d'exemple un dispositif 300 de préparation (par exemple un ordinateur) des réglages d'outils d'une part des positions des outils par rapport à leurs trajectoires et d'autre part des géométries de leurs arrêtes de coupe ou de leur trajectoires, les outils étant destinés à réaliser un ensemble d'opérations de fabrication pour l'obtention d'une série de pièces et pouvant appartenir à une ou plusieurs machines-outils.

Le dispositif 300 comprend des moyens de traitement, (par exemple sous forme de modules logiques) configurés pour, à partir de l'identification des faces destinées à être réalisées par les outils et de la connaissance de cotes-études et de cotes-méthodes :

- modéliser le processus de fabrication de façon arborescente par sa décomposition en postes de fabrication, en prises-de-pièces, en opérations de fabrication ou de posage et en faces fabriquées ou posées (module 302),
- construire une gamme d'étapes de réglage et une gamme d'étapes de surveillance des opérations de fabrication (module 304),
- générer pour chacune des deux gammes, respectivement un ensemble de cotes de fabrication à partir des cotes-études et de cotes-méthodes (module 306),
- générer pour l'ensemble des cotes de fabrication d'une gamme, un ensemble associé de cotes pilotes (module 308),
- générer pour chacune des deux gammes, des relations de calcul pour chaque étape de réglage ou de surveillance, permettant de calculer les corrections des cotes-pilotes en fonction des écarts constatés sur les cotes de fabrication mesurées (module 308).

Chaque module possède une sortie pour donner des résultats des différentes étapes du procédé.

Ainsi, à partir du dessin de définition et du choix des outils à utiliser fourni au dispositif 300, on obtient un ensemble d'informations techniques pour le réglage des outils, par exemple sous forme de dessins et de relations de calcul, ce qui permet avec peu de pièces de réglage, de rapidement obtenir le réglage pour la mise en série de pièces à fabriquer.

Il en résulte un gain de productivité conséquent.

Avantageusement, ce dispositif de préparation 300 peut équiper une ou plusieurs machines-outils, en particulier des machines-outils numériques.

De plus, l'invention concerne également un procédé de réglage d'une part des positions des outils par rapport à leurs trajectoires et d'autre part des géométries de leurs arrêtes de coupe ou de leurs trajectoires, les outils étant destinés à réaliser un ensemble d'opérations de fabrication pour l'obtention d'une série de pièces et pouvant appartenir à une ou plusieurs machines-outils.

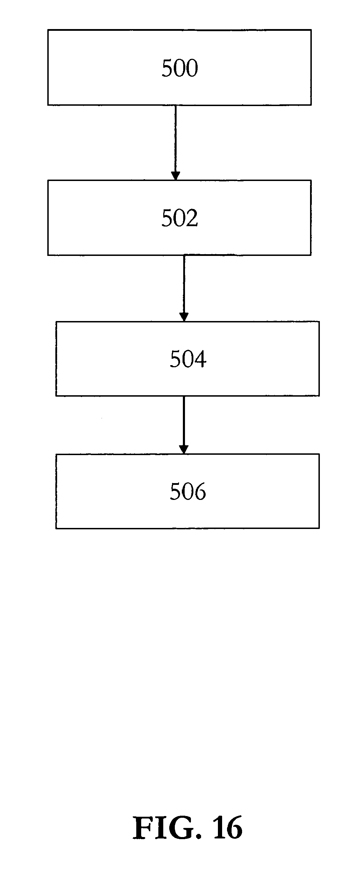

Ce procédé est illustré à l'aide d'un organigramme sur la figure 16.

Selon ce procédé, à partir de l'identification des faces destinées à être réalisées par les outils et de la connaissance de cotes-études et de cotes-méthodes, on met d'abord en oeuvre le procédé de préparation des réglages d'outils tel que décrit ci-dessus (cette mise en oeuvre est référencé 500).

Puis, on réalise à l'étape 502 des pièces de réglage selon la gamme d'étapes de réglage.

Ensuite, à une étape 504, on mesure sur ces pièces les cotes de fabrication à chaque étape de réglage.

Enfin, à l'étape référencée 506, on règle les outils en tenant compte des cotes-pilotes selon les dites relations de calcul.

On obtient donc plus rapidement des premières bonnes pièces, c'est-à-dire des pièces respectant les cotes-études du dessin de définition.

Comme cela a été expliqué ci-dessus, on distingue le réglage complet, du réglage en surveillance, c'est-à-dire le réglage lors de la production en série des pièces.

La gamme d'étape de surveillance avec son jeu de cotes pilotes permet de pallier à des dérives en production, par exemple dues à l'usure des outils. Cette gamme de surveillance et un réglage régulier des machines outils selon cette gamme, permet d'allonger la période de production sans interruption notable et donc aussi d'accroître la productivité des machines outils.

Pour ce faire, on mesure les cotes de fabrication de la gamme d'étapes de surveillance d'une pièce issue de la production et on ajuste le réglage des outils selon les relations de calcul des cotes-pilotes de la gamme d'étapes de surveillance.

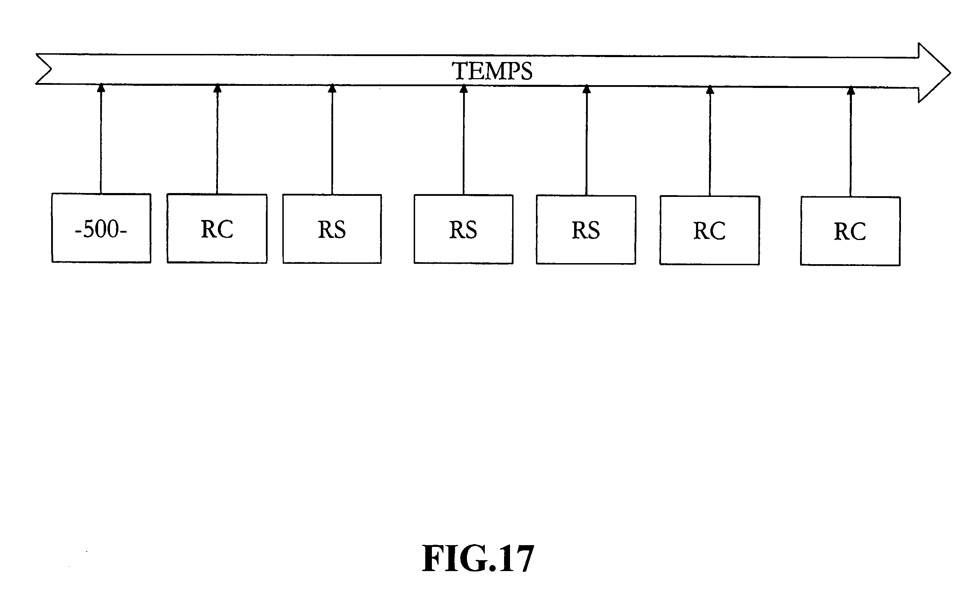

On a représenté à titre d'exemple sur la figure 17 un schéma temporel montrant la mise en oeuvre de l'invention.

Ainsi, pour la production en série de pièces, on met en oeuvre d'abord le procédé de préparation 500, puis un réglage complet RC ce qui permet de commencer la production en série de pièces bonnes. A intervalle régulier, on surveille par mesurage les cotes de fabrication des pièces issues de la production selon la gamme de surveillance et on réalise un réglage RS selon la gamme de surveillance, si besoin y est.

A des moments à définir, par exemple après un changement d'outil ou lorsque l'application des réglages selon la gamme de surveillance ne permet plus de corriger les dérives (il faut rappeler que la gamme de surveillance ne permet pas de régler et corriger tous les outils de sorte que la dérive de ceux qui ne sont pas accessible peut compromettre avec le temps la fabrication de pièces bonnes), on refait un réglage complet.

On comprend donc aisément que l'invention permet une maîtrise de la qualité géométrique des pièces produites ainsi que de la durée de vie des outils.

## Revendications

**1.** Procédé de préparation des réglages d'outils, les outils étant destinés à réaliser un ensemble d'opérations de fabrication pour l'obtention d'une série de pièces et pouvant appartenir à une ou plusieurs machines-outils, procédé dans lequel, à partir de l'identification des faces destinées à être réalisées par les outils et de la connaissance de cotes-études et de cotes-méthodes :

- on modélise le processus de fabrication de façon arborescente par sa décomposition en postes de fabrication, en prises-de-pièces, en opérations de fabrication ou de posage et en faces fabriquées ou posées,
- on construit une gamme d'étapes de réglage et une gamme d'étapes de surveillance des opérations de fabrication,
- pour chacune des deux gammes, on génère respectivement un ensemble de cotes de fabrication,
- pour l'ensemble des cotes de fabrication d'une gamme, on génère un ensemble associé de cotes pilotes,
- on génère pour chacune des deux gammes, des relations de calcul pour chaque étape de réglage ou de surveillance, permettant de calculer les corrections des cotes-pilotes en fonction des écarts constatés sur les cotes de fabrication mesurées.

**2.** Procédé de préparation des réglages d'outils selon la revendication 1, **caractérisé en ce que** l'on prend en compte deux modes de transfert entre prises-de-pièces, un mode de transfert en flux tendu et un mode de transfert par lot.

**3.** Procédé de préparation des réglages d'outils selon l'une quelconque des revendications 1 ou 2, **caractérisé en ce que** l'on prend en compte, pour une prise-de-pièce, une opération de posage sur une ou plusieurs faces de la pièce suivi d'une ou de plusieurs opérations de fabrication réalisant chacune une plusieurs faces.

**4.** Procédé de préparation des réglages d'outils selon l'une quelconque des revendications 2 ou 3, **caractérisé en ce que** préalablement à la génération des gammes d'étapes de réglage et de surveillance, on génère une gamme d'étapes de flux en tenant compte des modes de transfert entre prises-de-pièces successives et de la capacité à régler leurs outils simultanément, chaque étape de flux pouvant rassembler plusieurs prises-de-pièces.

**5.** Procédé de préparation des réglages d'outils selon la revendication 4, **caractérisé en ce que** l'on regroupe plusieurs prises-de-pièces consécutives, en une seule étape de flux si le transfert entre ces prises-de-pièces se fait en flux tendu et si on a la maîtrise simultanée des réglages des opérations de fabrication et de posage réalisées dans ces prises-de-pièce.

**6.** Procédé de préparation des réglages d'outils selon la revendication 4 ou 5, **caractérisé en ce qu'**une étape de flux est transformée en une étape de surveillance, si au moins une des faces, de position connue par rapport aux prises-de-pièces de l'étape de flux, est aussi de position connue dans l'étape de flux suivante et subsiste à l'issue de cette dernière.

**7.** Procédé de préparation des réglages d'outils selon l'une quelconque des revendications 4 à 6, **caractérisé en ce que** l'on séquence les opérations de fabrication et /ou de posage de chaque étape de flux en un nombre minimale d'étapes de réglage en vérifiant que pour chacune des étapes de réglage, toutes les faces posées ou usinées dans l'étape, et donc de positions connues, par rapport aux prises-de-pièces de l'étape, subsistent toutes à l'issue de cette étape, et si au moins une de ces faces est aussi de position connue dans l'étape de réglage suivante et subsiste à l'issue de cette dernière.

**8.** Procédé de préparation des réglages d'outils selon l'une quelconque des revendications 1 à 7, **caractérisé en ce que** parmi l'ensemble des chaînes possibles de cotes de fabrication permettant, de mesurer directement ou indirectement chaque cote-étude et chaque cote-méthode, on retient la chaine dont les cotes de fabrication ont des incertitudes de mesure dont la somme est minimale.

**9.** Procédé de préparation des réglages d'outils selon l'une quelconque des revendications 1 à 8, **caractérisé en ce que** pour la gamme d'étapes de réglage et la gamme d'étapes de surveillance, on supprime, dans l'ensemble des cotes de fabrication respectif, les boucles de cotes en recherchant pour chaque ensemble l'arbre recouvrant des cotes de fabrication dont la somme des incertitudes de mesure est minimale.

**10.** Procédé de préparation des réglages d'outils selon l'une quelconque des revendications 1 à 9, **caractérisé en ce qu'**une cote-pilote est une cote-outil reliant deux des faces réalisées par un outil.

**11.** Procédé de préparation des réglages d'outils selon l'une quelconque des revendications 1 à 10, **caractérisé en ce que** parmi l'ensemble des chaînes possibles de cotes-pilotes de chaque étape de flux de la gamme d'étapes de réglage et de la gamme d'étapes de surveillance, permettant de régler directement ou indirectement chaque cote de fabrication, on retient la chaine dont les cotes-pilotes ont des incertitudes de réglage dont la somme est minimale.

**12.** Procédé de préparation des réglages d'outils selon la revendication 11, **caractérisé en ce que** pour chaque étape de flux de la gamme d'étapes de réglage et de la gamme d'étapes de surveillance, on supprime, dans l'ensemble des cotes-pilote respectif, les boucles de cotes en recherchant pour chaque ensemble, l'arbre recouvrant des cotes-pilote dont la somme des incertitudes de réglage est minimale.

**13.** Procédé de réglage d'outils, les outils étant destinés à réaliser un ensemble d'opérations de fabrication pour l'obtention d'une série de pièces et pouvant appartenir à une ou plusieurs machines-outils, procédé dans lequel, à partir de l'identification des faces destinées à être réalisées par les outils et de la connaissance de cotes-études et de cotes-méthodes :

- on met en oeuvre le procédé de préparation des réglages d'outils selon l'une quelconque des revendications 1 à 12,
- on réalise des pièces de réglage selon la gamme d'étapes de réglage,
- on mesure sur ces pièces les cotes de fabrication à chaque étape de réglage, et
- on règle les outils en tenant compte des cotes-pilotes selon les dites relations de calcul.

**14.** Procédé de réglage selon la revendication 13, **caractérisé en ce que** l'on mesure les cotes de fabrication de la gamme d'étapes de surveillance d'une pièce issue de la production et **en ce qu'**on ajuste le réglage des outils selon les relations de calcul des cotes-pilotes de la gamme d'étapes de surveillance.

15. Dispositif de préparation des réglages d'outils, les outils étant destinés à réaliser un ensemble d'opérations de fabrication pour l'obtention d'une série de pièces et pouvant appartenir à une ou plusieurs machines-outils, **caractérisé en ce qu'**il comprend des moyens de traitement configurés pour, à partir de l'identification des faces destinées à être réalisées par les outils et de la connaissance de cotes-études et de cotes-méthodes :

- modéliser le processus de fabrication de façon arborescente par sa décomposition en postes de fabrication, en prises-de-pièces, en opérations de fabrication ou de posage et en faces fabriquées ou posées,
- construire une gamme d'étapes de réglage et une gamme d'étapes de surveillance des opérations de fabrication,
- générer pour chacune des deux gammes, respectivement un ensemble de cotes de fabrication,
- générer pour l'ensemble des cotes de fabrication d'une gamme, un ensemble associé de cotes pilotes,
- générer pour chacune des deux gammes, des relations de calcul pour chaque étape de réglage ou de surveillance, permettant de calculer les corrections des cotes-pilotes en fonction des écarts constatés sur les cotes de fabrication mesurées.

16. Machine-outil, **caractérisé en ce qu'**elle est équipée d'un dispositif de préparation des réglages d'outils selon la revendication 15.

## Claims

1. Method for preparing tool settings, the tools being intended to perform a set of production operations for obtaining a series of parts and possibly belonging to one or more machine tools, in which method, based on the identification of the faces intended to be produced by the tools and on the knowledge of study dimensions and methods dimensions:

- the manufacturing process is modelled as a tree by its breakdown into manufacturing stations, into workpiece grips, into manufacturing or placement operations and into faces manufactured or placed,
- a range of setting steps and a range of manufacturing operation monitoring steps are constructed,
- for each of the two ranges, a set of manufacturing dimensions is respectively generated,
- for all the manufacturing dimensions of a range, an associated set of pilot dimensions is generated,
- for each of the two ranges, computation relationships are generated for each setting or monitoring step, making it possible to calculate the corrections of the pilot dimensions based on the deviations observed on the measured manufacturing dimensions.

2. Method for preparing tool settings according to Claim 1, **characterized in that** two transfer modes between workpiece grips are taken into account: a critical flow transfer mode and a batch transfer mode.

3. Method for preparing tool settings according to any one of Claims 1 or 2, **characterized in that**, for a workpiece grip, account is taken of a placement operation on one or more faces of the workpiece followed by one or more manufacturing operations each producing one or more faces.

4. Method for preparing tool settings according to any one of Claims 2 or 3, **characterized in that**, prior to the generation of the ranges of setting and monitoring steps, a range of flow steps is generated by taking account of the transfer modes between successive workpiece grips and of the capacity to set their tools simultaneously, each flow step being able to combine a number of workpiece grips.

5. Method for preparing tool settings according to Claim 4, **characterized in that** a number of consecutive workpiece grips are grouped together in a single flow step if the transfer between these workpiece grips is made in critical flow mode and if there is simultaneous control of the settings of the manufacturing and placement operations performed in these workpiece grips.

6. Method for preparing tool settings according to Claim 4 or 5, **characterized in that** a flow step is transformed into a monitoring step, if at least one of the faces, of known position relative to the workpiece grips of the flow step, is also of known position in the next flow step and remains on completion thereof.

7. Method for preparing tool settings according to any one of Claims 4 to 6, **characterized in that** the manufacturing and/or placement operations of each flow step are sequenced as a minimum number of setting steps by checking that, for each of the setting steps, all the faces placed or machined in the step, and therefore of known positions, relative to the workpiece grips of the step, all remain on completion of that step, and if at least one of these faces is also of known position in the next setting step and remains on completion thereof.

8.  Method for preparing tool settings according to any one of Claims 1 to 7, **characterized in that**, from all the possible lines of manufacturing dimensions making it possible to measure directly or indirectly each study dimension and each method dimension, the line for which the manufacturing dimensions have measurement uncertainties of which the sum is minimal is retained.

9.  Method for preparing tool settings according to any one of Claims 1 to 8, **characterized in that**, for the range of setting steps and the range of monitoring steps, in all the respective manufacturing dimensions, the dimension loops are eliminated by searching, for each set, for the tree covering the manufacturing dimensions for which the sum of the measurement uncertainties is minimal.

10. Method for preparing tool settings according to any one of Claims 1 to 9, **characterized in that** a pilot dimension is a tool dimension linking two of the faces produced by a tool.

11. Method for preparing tool settings according to any one of Claims 1 to 10, **characterized in that**, from all the possible lines of pilot dimensions of each flow step of the range of setting steps and of the range of monitoring steps, making it possible to directly or indirectly set each manufacturing dimension, the line for which the pilot dimensions have setting uncertainties of which the sum is minimal is retained.

12. Method for preparing tool settings according to Claim 11, **characterized in that**, for each flow step of the range of setting steps and of the range of monitoring steps, in all the respective pilot dimensions, the dimension loops are eliminated by searching, for each set, for the tree covering the pilot dimensions for which the sum of the setting uncertainties is minimal.

13. Method for setting tools, the tools being intended to carry out a set of manufacturing operations in order to obtain a series of parts and possibly belonging to one or more machine tools, in which method, based on the identification of the faces intended to be produced by the tools and on the knowledge of study dimensions and of methods dimensions:

    - the method for preparing tool settings according to any one of Claims 1 to 12 is implemented,
    - setting parts are produced according to the range of setting steps,
    - on these parts, the manufacturing dimensions are measured in each setting step, and
    - the tools are set by taking into account the pilot dimensions according to said calculation relationships.

14. Setting method according to Claim 13, **characterized in that** the manufacturing dimensions of the range of steps for monitoring a part obtained from production are measured and **in that** the setting of the tools is adjusted according to the calculation relationships for the pilot dimensions of the range of monitoring steps.

15. Device for preparing tool settings, the tools being intended to carry out a set of manufacturing operations in order to obtain a series of parts and possibly belonging to one or more machine tools, **characterized in that** it comprises processing means configured, based on the identification of the faces intended to be produced by the tools and on the knowledge of study dimensions and of methods dimensions, to:

    - model the manufacturing process as a tree by its breakdown into manufacturing stations, into workpiece grips, into manufacturing or placement operations and into faces manufactured or placed,
    - construct a range of setting steps and a range of monitoring steps for the manufacturing operations,
    - generate, for each of the two ranges, respectively a set of manufacturing dimensions,
    - generate, for all the manufacturing dimensions of a range, an associated set of pilot dimensions,
    - generate, for each of the two ranges, calculation relationships for each setting or monitoring step, making it possible to calculate the corrections of the pilot dimensions based on the deviations observed on the measured manufacturing dimensions.

16. Machine tool, **characterized in that** it is equipped with a device for preparing tool settings according to Claim 15.

**Patentansprüche**

1. Verfahren zur Vorbereitung der Werkzeugeinstellungen, wobei die Werkzeuge dazu bestimmt sind, eine Gruppe von Herstellungsvorgängen zum Erhalt einer Serie von Werkstücken auszuführen, und zu einer oder mehreren Werkzeugmaschinen gehören können, Verfahren, bei dem ausgehend von der Erkennung der Seiten, die von den Werkzeugen ausgeführt werden sollen, und der Kenntnis von Konstruktionsmaßen und von Verfahrensmaßen:

   - der Herstellungsprozess durch seine Zerlegung in Herstellungsstationen, in Werkstückaufnahmen, in Herstellungs- oder Aufspannvorgänge und in hergestellte oder aufgespannte Seiten baumartig modelliert wird,
   - eine Reihe von Einstellschritten und eine Reihe von Überwachungsschritten der Herstellungsvorgänge konstruiert wird,
   - für jede der zwei Reihen jeweils eine Gruppe von Herstellungsmaßen erzeugt wird,
   - für die Gruppe der Herstellungsmaße einer Reihe eine zugeordnete Gruppe von Pilotmaßen erzeugt wird,
   - für jede der zwei Reihen Rechenbeziehungen für jeden Einstell- oder Überwachungsschritt erzeugt werden, die es ermöglichen, die Korrekturen der Pilotmaße abhängig von den an den gemessenen Herstellungsmaßen festgestellten Abweichungen zu berechnen.

2. Verfahren zur Vorbereitung der Werkzeugeinstellungen nach Anspruch 1, **dadurch gekennzeichnet, dass** zwei Übertragungsmodi zwischen Werkstückaufnahmen berücksichtigt werden, ein bedarfsorientierter Übertragungsmodus und ein chargenweiser Übertragungsmodus.

3. Verfahren zur Vorbereitung der Werkzeugeinstellungen nach einem der Ansprüche 1 oder 2, **dadurch gekennzeichnet, dass** für eine Werkstückaufnahme ein Vorgang der Aufspannung an einer oder mehreren Seiten des Werkstücks gefolgt von einem oder mehreren Herstellungsvorgängen berücksichtigt wird, die je eine oder mehrere Seiten ausführen.

4. Verfahren zur Vorbereitung der Werkzeugeinstellungen nach einem der Ansprüche 2 oder 3, **dadurch gekennzeichnet, dass** vor der Erzeugung der Reihen von Einstell- und Überwachungsschritten eine Reihe von Ablaufschritten unter Berücksichtigung der Übertragungsmodi zwischen aufeinanderfolgenden Werkstückaufnahmen und der Fähigkeit, ihre Werkzeuge gleichzeitig einzustellen, erzeugt wird, wobei jeder Ablaufschritt mehrere Werkstückaufnahmen gruppieren kann.

5. Verfahren zur Vorbereitung der Werkzeugeinstellungen nach Anspruch 4, **dadurch gekennzeichnet, dass** mehrere aufeinanderfolgende Werkstückaufnahmen in einem einzigen Ablaufschritt zusammengefasst werden, wenn die Übertragung zwischen diesen Werkstückaufnahmen bedarfsorientiert erfolgt, und wenn man die Einstellungen der Herstellungs- und Aufspannvorgänge, die in diesen Werkstückaufnahmen ausgeführt werden, gleichzeitig beherrscht.

6. Verfahren zur Vorbereitung der Werkzeugeinstellungen nach Anspruch 4 oder 5, **dadurch gekennzeichnet, dass** ein Ablaufschritt in einen Überwachungsschritt umgewandelt wird, wenn mindestens eine der Seiten mit bezüglich der Werkstückaufnahmen des Ablaufschritts bekannter Stellung auch im folgenden Ablaufschritt von bekannter Stellung ist und nach dessen Ende fortbesteht.

7. Verfahren zur Vorbereitung der Werkzeugeinstellungen nach einem der Ansprüche 4 bis 6, **dadurch gekennzeichnet, dass** die Herstellungs- und/oder Aufspannvorgänge jedes Ablaufschritts in eine minimale Anzahl von Einstellschritten sequenziert werden, indem geprüft wird, dass für jeden der Einstellschritte alle im Schritt aufgespannten oder bearbeiteten und somit bekannte Stellungen bezüglich der Werkstückaufnahmen des Schritts aufweisenden Seiten am Ende dieses Schritts fortbestehen, und ob mindestens eine dieser Seiten auch im folgenden Einstellschritt eine bekannte Stellung hat und nach dessen Ende fortbesteht.

8. Verfahren zur Vorbereitung der Werkzeugeinstellungen nach einem der Ansprüche 1 bis 7, **dadurch gekennzeichnet, dass** unter der Gruppe der möglichen Ketten von Herstellungsmaßen, die es ermöglichen, direkt oder indirekt jedes Konstruktionsmaß und jedes Verfahrensmaß zu messen, die Kette gewählt wird, deren Herstellungsmaße Messungsungewissheiten haben, deren Summe minimal ist.

9. Verfahren zur Vorbereitung der Werkzeugeinstellungen nach einem der Ansprüche 1 bis 8, **dadurch gekennzeichnet, dass** für die Reihe von Einstellschritten und die Reihe von Überwachungsschritten in der jeweiligen Gruppe der Herstellungsmaße die Maßschleifen unterdrückt werden, indem für jede Gruppe der Baum gesucht wird, der Herstellungsmaße abdeckt, deren Summe der Messungewissheiten minimal ist.

**10.** Verfahren zur Vorbereitung der Werkzeugeinstellungen nach einem der Ansprüche 1 bis 9, **dadurch gekennzeichnet, dass** ein Pilotmaß ein Werkzeugmaß ist, das zwei der von einem Werkzeug ausgeführten Seiten verbindet.

**11.** Verfahren zur Vorbereitung der Werkzeugeinstellungen nach einem der Ansprüche 1 bis 10, **dadurch gekennzeichnet, dass** unter der Gruppe der möglichen Ketten von Pilotmaßen jedes Ablaufschritts der Reihe von Einstellschritten und der Reihe von Überwachungsschritten, die es ermöglichen, jedes Herstellungsmaß direkt oder indirekt einzustellen, die Kette gewählt wird, deren Pilotmaße Einstellungewissheiten haben, deren Summe minimal ist.

**12.** Verfahren zur Vorbereitung der Werkzeugeinstellungen nach Anspruch 11, **dadurch gekennzeichnet, dass** für jeden Ablaufschritt der Reihe von Einstellschritten und der Reihe von Überwachungsschritten in der jeweiligen Gruppe von Pilotmaßen die Maßschleifen unterdrückt werden, indem für jede Gruppe der Baum gesucht wird, der Pilotmaße abdeckt, deren Summe der Einstellungewissheiten minimal ist.

**13.** Verfahren zur Einstellung von Werkzeugen, wobei die Werkzeuge dazu bestimmt sind, eine Gruppe von Herstellungsvorgängen zum Erhalt einer Serie von Werkstücken auszuführen, und zu einer oder mehreren Werkzeugmaschinen gehören können, Verfahren, bei dem ausgehend von der Erkennung der Seiten, die dazu bestimmt sind, von den Werkzeugen ausgeführt zu werden, und der Kenntnis von Konstruktionsmaßen und Verfahrensmaßen:

- das Verfahren zur Vorbereitung der Werkzeugeinstellungen nach einem der Ansprüche 1 bis 12 durchgeführt wird,
- Einstellwerkstücke gemäß der Reihe von Einstellschritten ausgeführt werden,
- an diesen Werkstücken die Herstellungsmaße in jedem Einstellschritt gemessen werden, und
- die Werkzeuge unter Berücksichtigung der Pilotmaße gemäß den Rechenbeziehungen eingestellt werden.

**14.** Einstellverfahren nach Anspruch 13, **dadurch gekennzeichnet, dass** die Herstellungsmaße der Reihe von Überwachungsschritten eines aus der Produktion stammenden Werkstücks gemessen werden, und dass die Einstellung der Werkzeuge gemäß den Rechenbeziehungen der Pilotmaße der Reihe von Überwachungsschritten angepasst wird.

**15.** Vorrichtung zur Vorbereitung der Werkzeugeinstellungen, wobei die Werkzeuge dazu bestimmt sind, eine Gruppe von Herstellungsvorgängen zum Erhalt einer Reihe von Werkstücken auszuführen, und zu einer oder mehreren Werkzeugmaschinen gehören können, **dadurch gekennzeichnet, dass** sie Verarbeitungsmittel enthält, die konfiguriert sind, um ausgehend von der Erkennung der Seiten, die dazu bestimmt sind, von den Werkzeugen ausgeführt zu werden, und von der Kenntnis von Konstruktionsmaßen und von Verfahrensmaßen:

- den Herstellungsprozess durch seine Zerlegung in Herstellungsstationen, in Werkstückaufnahmen, in Herstellungs- oder Aufspannvorgänge und in hergestellte oder aufgespannte Seiten baumartig zu modellieren,
- eine Reihe von Einstellschritten und eine Reihe von Überwachungsschritten der Herstellungsvorgänge zu konstruieren,
- für jede der zwei Reihen jeweils eine Gruppe von Herstellungsmaßen zu erzeugen,
- für die Gruppe der Herstellungsmaße einer Reihe eine zugeordnete Gruppe von Pilotmaßen zu erzeugen,
- für jede der zwei Reihen Rechenbeziehungen für jeden Einstell- oder Überwachungsschritt zu erzeugen, die es ermöglichen, die Korrekturen der Pilotmaße abhängig von den an den gemessenen Herstellungsmaßen festgestellten Abweichungen zu berechnen.

**16.** Werkzeugmaschine, **dadurch gekennzeichnet, dass** sie mit einer Vorrichtung zur Vorbereitung der Werkzeugeinstellungen nach Anspruch 15 ausgestattet ist.

20T0,2        50T0,2

10T0,07              30T0,2

0,3T0,2              0,2T0,1

1a 1   2   3 3a      4        5

P

# FIG. 1

20T0,2        50T0,2

10T0,07              30T0,2

0,3T0,2              0,2T0,1

P

Etape de flux N°1

Etape de flux N° 2

Etape de flux N° 3

1a 1   2   3 3a      4        5

●    Face posée

✕    Face usinée

# FIG. 6

**FIG. 2**

Processus de fabrication

Niveau 4 →

Niveau 3 →

Niveau 2 →

Niveau 1 →

Temps

# FIG. 3

Etape de réglage 1                Etape de réglage 2 & 3                Etape de réglage 4

70,3                70                20                10

20,2                30

1a                5                1    3a        5                1    3    4    5                2    3

C1a,1                C1,2                C3,4,3                C2,4

C3a,2                C3,3

# FIG. 14

**Processus de fabrication**

Niveau 4

| 200 | 202 | 204 |

Niveau 3

Prise-de-pièce N° 1

Prise-de-pièce N° 2

Prise-de-pièce N° 3

Prise-de-pièce N° 4

1a          5

1a  3 3a  4      5

1      5

2 3

Niveau 2

| 200-1 | 200-2 | 202-1 | 202-2 | 202-3 | 202-4 | 202-5 | 204-1 | 204-2 |

TEMPS

## FIG. 4

EP 2 213 395 B1

P

G     G     G     G

1a     5     1a 3 3a 4    5     1    5     2 3

| Prise-de-pièce N° 1 | Prise-de-pièce N° 2 | Prise-de-pièce N° 3 | Prise-de-pièce N° 4 |

**Étape de flux N° 1**

**Étape de flux N° 2**

**Étape de flux N° 3**

## FIG. 5

# FIG. 7

20T0,2   50T0,2

10T0,07   30T0,2

0,3T0,2

Etape de surveillance N°1
Etape de surveillance N° 2
Etape de surveillance N° 3

1a 1   2   3   4   5

# FIG. 8

20T0,2   50T0,2

10T0,07   30T0,2

0,3T0,2   0,2T0,1

Etape de réglage 1
Etape de réglage 2
Etape de réglage 3
Etape de réglage 4

1a 1   2   3 3a   4   5

# FIG. 9

# FIG. 10

**FIG. 11**

**FIG. 12**

a)   Etape de réglage 1       b)   Etape de réglage 2 & 3     c)   Etape de réglage 4

# FIG. 13

**FIG.15**

EP 2 213 395 B1

```
┌─────────────────────────┐
│                         │
│          500            │
│                         │
└─────────────────────────┘
             │
             ▼
┌─────────────────────────┐
│                         │
│          502            │
│                         │
└─────────────────────────┘
             │
             ▼
┌─────────────────────────┐
│                         │
│          504            │
│                         │
└─────────────────────────┘
             │
             ▼
┌─────────────────────────┐
│                         │
│          506            │
│                         │
└─────────────────────────┘
```

**FIG. 16**

TEMPS →

| -500- | RC | RS | RS | RS | RC | RC |

**FIG.17**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Dessins techniques : Principes généraux cotation et tolérancement représentation simplifiée et particulière. Recueil de normes françaises. 1991